# EUROPÄISCHE PATENTSCHRIFT

(11) **EP 3 578 451 B1**
(45) Veröffentlichungstag und Bekanntmachung des Hinweises auf die Patenterteilung: **18.01.2023**
(21) Anmeldenummer: 19000233.7
(22) Anmeldetag: 06.05.2019
(51) Int. Cl.: B62M 9/122

(54) **STELLEINRICHTUNG FÜR EIN FAHRRAD UND VERFAHREN ZUR STEUERUNG ODER EINSTELLUNG SOLCHER STELLEINRICHTUNGEN**
ACTUATORS FOR A BICYCLE AND METHOD FOR CONTROLLING OR ADJUSTING SUCH ACTUATORS
DISPOSITIF DE RÉGLAGE POUR UNE BICYCLETTE ET PROCÉDÉ DE COMMANDE OU DE RÉGLAGE D'UN TEL DISPOSITIF DE RÉGLAGE

(30) Priorität: 15.05.2018 DE 102018207493
(43) Veröffentlichungstag der Anmeldung: 11.12.2019
(73) Patentinhaber: SRAM Deutschland GmbH, 97424 Schweinfurt (DE)
(72) Erfinder: Düweling, Sebastian, 97453 Schonungen/OT Mainberg (DE); Reinbold, Matthias, 97070 Würzburg (DE); Böhm, Robert, 97453 Schonungen/OT Mainberg (DE); Baumann, Sven, 97508 Grettstadt (DE); Schmelzing, Sven, 97505 Geldersheim (DE)

(56) Entgegenhaltungen:
- EP-A1- 1 010 613
- EP-A1- 2 868 566
- US-A1- 2005 239 587
- US-A1- 2015 111 675
- US-A1- 2016 033 030

## Beschreibung

Die vorliegende Erfindung betrifft Stelleinrichtungen für Fahrräder, Verfahren zur Steuerung von Stelleinrichtungen für Fahrräder sowie Verfahren zur Einstellung solcher Stelleinrichtungen.

Eine elektromechanische Stelleinrichtung für ein Fahrrad in Form eines elektrischen Schaltwerks ist beispielsweise aus der US 2015/O111675 A1 bekannt und umfasst ein am Fahrradrahmen zu befestigendes Element, ein hierzu bewegliches Element sowie einen elektromechanischen Antrieb, welcher zur Einstellung einer gewünschten Schaltstufe das bewegliche Element in Bezug auf das feststehende Element bewegt. Der elektromechanische Antrieb wird durch eine Motorgetriebeanordnung betrieben, welche die Umdrehung eines Elektromotors untersetzt und an einer Getriebeausgangswelle zur Bewegung des beweglichen Elements bereitstellt. Für eine zuverlässige Einstellung der Sollposition des beweglichen Elements ist eine Positionserfassungseinrichtung vorgesehen, welche in Form eines elektromagnetischen Rotationssensors die Drehposition eines mit der Getriebeausgangswelle kämmenden Positionserfassungsrads ermittelt. Um Ungenauigkeiten in der Erfassung der Drehstellung aufgrund eines Spiels zwischen dem Positionserfassungsrad und der Getriebeausgangswelle zu reduzieren, ist das Positionserfassungsrad zusätzlich im Eingriff mit einem Spannrad, welches durch eine Torsionsfeder kontinuierlich in eine Rotationsrichtung vorgespannt ist. Unabhängig von einer Drehrichtung der Getriebeausgangswelle ist somit das Positionserfassungsrad stets in Anlagekontakt mit den gleichen Zahnflanken.

Nachteilig an dieser Konstruktion ist, dass die Kraft der Torsionsfeder von der Drehstellung des Spannrads abhängt und die für einen optimalen Betrieb ausgelegte Spannkraft nur bei einem bestimmten Drehwinkel oder über einen kleinen Drehwinkelbereich hinweg wirkt. Am Anfang und am Ende des Drehwinkelbereichs ist dagegen die Spannkraft der Torsionsfeder entweder zu gering, so dass die Spielreduzierung nicht mehr zuverlässig gewährleistet ist, oder ist zu hoch, so dass die Torsionsfeder das Ausgangsdrehmoment des Getriebes zu stark beeinflusst.

Eine weitere Herausforderung bei der Konstruktion elektromechanischer Stelleinrichtungen für Fahrräder liegt in der Auslegung und Positionierung der Getriebeelemente, insbesondere der darin verbauten Stufenzahnräder. Bei den bekannten Lösungen ist zumindest ein kleineres der beiden Zahnräder des Stufenzahnrads, auch "Ritzel" genannt, einteilig mit der Getriebewelle ausgebildet. Um steigenden Ansprüchen an die zu übertragenden Drehmomente gerecht zu werden, besteht nun der Wunsch, gehärtete Zahnradstufen zu verwenden. Hierbei tritt jedoch die Problematik auf, dass eine Härtung des Ritzels zusammen mit seiner Getriebeachse insbesondere bei längeren Achsen zu einem Härteverzug führt und die Positioniergenauigkeit der Getriebewellen beeinträchtigt wird. Außerdem stellen bisherige Stufenzahnräder relativ hohe Anforderungen an die Position der Lagerung der Getriebeachsen in den zugeordneten Drehlagern.

Die Montage von herkömmlichen Getrieben für elektromechanische Stelleinrichtungen für Fahrräder wird ferner dadurch erschwert, dass die Position der Ausgangswelle des Motors sehr genau auf die Position des Eingangselements des Getriebes abgestimmt sein muss. Dies kann insbesondere dann problematisch sein, wenn entsprechend der ständigen Forderung einer Reduzierung von Gewicht von Fahrradkomponenten als Material für das Gehäuse ein Kunststoffmaterial eingesetzt wird, da Schraubverbindungen zur Befestigung von Motor oder Getriebebauteilen am Gehäuseteil die Gefahr bergen, dass die exakte Position der Elemente von der Anzugskraft der Schrauben abhängt. Solche Schraubverbindungen zwischen Metall und Kunststoff neigen darüber hinaus dazu, sich mit der Zeit zu verziehen oder zu lockern.

Eine weitere elektromechanische Stelleinrichtung ist aus der DE 42 12 320 A1 bekannt. Auch diese Stelleinrichtung umfasst ein am Fahrradrahmen zu befestigendes feststehendes Element, ein in Bezug auf das feststehende Element bewegliches Element sowie einen elektromechanischen Antrieb, welcher Antriebskraft für eine Bewegung des beweglichen Elements bereitstellt. Die Stelleinrichtung ist dabei Teil eines elektromechanischen Schaltwerks zur Einstellung von verschiedenen Schaltstufen einer Kettenschaltung. Um eine Beschädigung des elektromechanischen Antriebs im Falle einer Blockade des beweglichen Elements zu vermeiden, ist die bekannte Stelleinrichtung dafür eingerichtet, eine solche Blockade zu erkennen und den Motorstrom zu unterbrechen. Zur Verhinderung einer Überlastung von Getriebe und Motor, kann ferner eine Überlastkupplung zum Einsatz kommen, welche den Kraftfluss vom Motor zum beweglichen Element unterbricht, wenn an der Überlastkupplung ein vorbestimmtes Überlastdrehmoment überschritten wird.

Es hat sich in der Praxis gezeigt, dass für den zufriedenstellenden Betrieb einer solchen elektromechanischen Stelleinrichtung eine recht genaue Abstimmung zwischen dem maximalen Motorstrom, dem Überlastdrehmoment und dem Zeitpunkt der Abschaltung des Motorstroms erfolgen muss, um die gewünschte Wirkung einer Vermeidung von Beschädigungen zu erreichen. Ist das Überlastdrehmoment zu hoch eingestellt, so kommt es im Falle einer Blockierung des beweglichen Elements zu einer sehr starken Belastung von Motor und Getriebe. Ist das Überlastdrehmoment zu gering eingestellt, so kommt es zu häufigen Fehlauslösungen der Überlastkupplung und damit sowohl zu einer Funktionsbeeinträchtigung der Stelleinrichtung als auch zu einer übermäßigen Geräuschentwicklung. Zudem ist die Messung des Motorstroms zur Erfassung eines Blockadezustands relativ aufwändig.

Die aus der DE 42 12 320 A1 bekannte elektromechanische Stelleinrichtung verfügt ferner über eine Trimmfunktion zur Einstellung und Nachjustierung der Ausrichtung zwischen Schaltwerk und Ritzelpaket. Insbesondere bei Schaltwerken mit einer hohen Anzahl an Schaltstufen ist eine exakte Positionierung zwischen Schaltwerk und Ritzelpaket von entscheidender Bedeutung für ein schleiffreies Einstellen der jeweiligen Schaltstufen. Hierfür erlaubt die Trimmfunktion der bekannten Steuereinrichtung die Verschiebung der Schaltpositionen um einen bestimmten Trimmbetrag, um Fertigungstoleranzen des Schaltwerks oder Abweichungen zwischen verschiedenen Rahmenmodellen und verschiedenen Ritzelpaketen auszugleichen. Die bekannte Stelleinrichtung verwirklicht damit die gleiche Trimmfunktion, wie sie auch bereits von rein mechanisch arbeitenden Schaltwerken durch Einstellung einer Länge des Schaltkabels bekannt ist.

Auch wenn sich mit der bekannten Trimmfunktion eine Abstimmung zwischen der Position des Schaltwerks und der Position des Ritzelpakets erreichen lässt, so hat sich doch gezeigt, dass insbesondere bei Vergrößerung der Anzahl an Schaltstufen noch immer ein Bedarf nach Verbesserung der Schaltgenauigkeit verbleibt und in bestimmten Konstellationen ein "Schleifen" einer Schaltstufe schwer zu verhindern ist. Eine fehlerfreie Schaltung ist daher nur bei einer Kombination aus einem bestimmten Schaltwerkstyp und einem zugehörigen Ritzelpaket zu erreichen. Sobald es jedoch zu Abweichungen vom Idealfall kommt, beispielsweise durch Verwendung anderer Komponenten oder auch durch ein verbogenes Schaltauge, durch Toleranzabweichungen des Rahmens, durch Toleranzabweichungen des Ritzelpakets oder durch Toleranzabweichungen des Schaltwerks, kann ein präzises Schalten aller Schaltstufen auch durch die bekannten Trimmfunktionen nicht mehr im gewünschten Maße erreicht werden.

Eine weitere Schwierigkeit bei der Einstellung der Schaltpositionen durch die herkömmliche Trimmfunktion entsteht bei einer Erhöhung der Anzahl an Schaltstufen entsprechend einer Erhöhung der Anzahl an Ritzeln im Ritzelpaket, zum Beispiel einer Erhöhung der Ritzelanzahl von herkömmlich etwa fünf bis sieben auf zehn oder mehr, zum Beispiel zwölf Ritzel. Eine entsprechende axiale Vergrößerung des Ritzelpakets und damit des Abstands zwischen niedrigster Schaltposition und höchster Schaltposition führt in den niedrigsten bzw. höchsten Schaltpositionen zu einem besonders starken Schräglauf der Kette zwischen vorderem Kettenrad und Ritzelpaket. Der Schräglauf der Kette übt eine Kraft in axialer Richtung auf die Kettenführungsräder des Schaltwerks aus und beansprucht damit das Schaltwerk in einer Richtung, die einer präzisen Einstellung der Schaltpositionen entgegenwirkt. Aufgrund dieser Kräfte erreicht somit das Schaltwerk in den höchsten bzw. niedrigsten Schaltstufen nicht die gewünschten Sollpositionen und es kommt in der Folge zu einem unsauberen Kettenlauf, einem unsauberen Schalten, Laufgeräuschen in diesen Schaltstufen sowie möglicherweise sogar unbeabsichtigtem Schalten.

Eine Stelleinrichtung mit den Merkmalen der Präambel ist aus dem Dokument US 2005/0239587 A1 bekannt.

Es ist allgemein Aufgabe der vorliegenden Erfindung gemäß den nachfolgend ausgeführten Aspekten, Stelleinrichtungen und zugeordnete Verfahren anzugeben, welche einen oder mehrere der vorstehend genannten Nachteile des Stands der Technik adressieren und entsprechende Wege zur Verbesserung derartiger Einrichtungen und Verfahren aufzeigen.

Eine erste Aufgabe der Erfindung ist es, eine Stelleinrichtung für ein Fahrrad bereitzustellen, welche einen elektromechanischen Antrieb mit einem Motor und einem Getriebe umfasst, wobei durch eine vergrößerte Positionsgenauigkeit zwischen den Elementen des Antriebs ein besonders präziser und zuverlässiger Betrieb ermöglicht wird.

Gemäß einem ersten Aspekt der Erfindung wird die vorstehend genannte erste Aufgabe gelöst durch eine Stelleinrichtung für ein Fahrrad, umfassend ein feststehendes Element, welches in Bezug auf einen Fahrradrahmen ortsfest angeordnet ist, ein bewegliches Element, welches in Bezug auf das feststehende Element beweglich ist, einen elektromechanischen Antrieb, welcher Antriebskraft für eine Bewegung des beweglichen Elements bereitstellt, wobei der elektromechanische Antrieb einen Motor und ein durch den Motor angetriebenes Getriebe aufweist, wobei das Getriebe ein erstes Getrieberad und ein mit dem ersten Getrieberad in Eingriff stehendes zweites . Getrieberad umfasst, wobei das zweite Getrieberad zwei Teilräder mit jeweils gleicher Zahnzahl umfasst, welche beide gleichzeitig im Eingriff mit dem ersten Getrieberad sind, wobei die Teilräder um die gleiche Drehachse drehbar sind und durch eine Kraft in Drehrichtung um die Drehachse relativ zueinander vorgespannt sind. Anzumerken ist dabei, dass im Sinne der vorliegenden Offenbarung unter Getrieberädern vorzugsweise Zahnräder verstanden werden. Einzelne Getrieberäder könnten jedoch auch ohne Zahneingriff, beispielsweise durch Reibeingriff, die hierin beschriebenen Funktionen erfüllen, so dass auch solche unverzahnte Räder als Getrieberäder angesehen werden.

Erfindungsgemäß weist das zweite Getrieberad somit zwei Teilräder gleicher Zahnzahl auf, die zueinander vorgespannt sind und gleichzeitig im Eingriff mit dem ersten Getrieberad sind. Die sich gerade im Eingriff mit dem ersten Getrieberad befindlichen Zähne der zwei Teilräder werden durch die Kraft in Richtung gegenüberliegender Zahnflanken des ersten Getrieberads gedrückt und liegen dort spielfrei an. Unabhängig von der Drehrichtung des ersten Getrieberads sind daher die Zähne der zwei Teilräder stets spielfrei in Eingriff mit den jeweiligen Zahnflanken des ersten Getrieberads vorgespannt. Im Ergebnis kann eine Genauigkeit der Rotationsstellung des zweiten Getrieberads unabhängig von der Rotationsstellung des ersten Getrieberads vergrößert werden.

Die Kraft zwischen den beiden Teilrädern kann durch eine Krafterzeugungseinrichtung erzeugt werden, welche funktionell zwischen beiden Teilrädern angeordnet ist, so dass sie sich einerseits an einem ersten Teilrad der beiden Teilräder abstützt und sich andererseits an einem zweiten Teilrad der beiden Teilräder abstützt. Die Krafterzeugungseinrichtung kann insbesondere eine elastische Einrichtung, zum Beispiel eine Torsionsfeder sein. Im Gegensatz zum Stand der Technik stützt sich eine solche elastische Einrichtung dann jedoch nicht an einem festen Bauteil ab, sondern erzeugt eine Relativkraft zwischen den beiden Teilrädern zur Vorspannung der Teilräder in entgegengesetzte Drehrichtungen.

Da die Teilräder relativ zueinander vorgespannt sind, sich ihre Relativlagen zueinander jedoch bei einer Drehung des zweiten Getrieberads oder des ersten Getrieberads im Wesentlichen nicht ändern, ist die Kraft, welche die Teilräder gegeneinander vorspannt, unabhängig von einer Drehstellung des zweiten Getrieberads. Im Ergebnis kann in jeder Drehstellung des zweiten Getrieberads eine zuverlässige Spielreduzierung erreicht werden und die Kraft kann derart bemessen sein, dass sie das Drehmoment am ersten Getrieberad nicht wesentlich beeinflusst.

In einer Ausführungsform der Erfindung des ersten Aspekts kann ein erstes Teilrad der beiden Teilräder relativ zur Drehachse mit einem vorbestimmten ersten radialen Spiel gelagert sein und ein zweites Teilrad der beiden Teilräder kann relativ zur Drehachse mit einem vorbestimmten zweiten radialen Spiel, welches kleiner ist als das erste radiale Spiel, oder ohne radiales Spiel gelagert sein. Das erste, mit (größerem) Spiel gelagerte Teilrad ist dann in der Lage, sich leicht exzentrisch zur Drehachse zu positionieren, um sich relativ zum zweiten Teilrad nicht nur in Drehrichtung sondern auch in radialer Richtung in eine abweichende Lage zu bringen und ein Flankenspiel gegenüber dem ersten Getrieberad weiter zu eliminieren. Hierbei wird insbesondere daran gedacht, dass auch das radiale (größere) Spiel des ersten Teilrads durch eine Kraft kontrolliert wird, beispielsweise durch eine Kraft der gleichen Krafterzeugungseinrichtung, die auch die Relativdrehung der beiden Teilräder zueinander vorspannt.

Das (größere) radiale Spiel des ersten Teilrads kann insbesondere dadurch realisiert werden, dass beide Teilräder auf einer gemeinsamen Getriebewelle gelagert sind, wobei ein Durchmesser eines das erste Teilrad lagernden axialen Abschnitts der Getriebewelle kleiner ist als ein Durchmesser eines das zweite Teilrad lagernden axialen Abschnitts der Getriebewelle. In dieser Ausführungsform können insbesondere beide Teilräder baugleich sein, so dass Kosten- und Montageaufwand reduziert wird. Alternativ oder zusätzlich könnte aber ein Durchmesser einer die Getriebewelle aufnehmenden zentralen Öffnung des ersten Teilrads größer sein als ein Durchmesser einer die Getriebewelle aufnehmenden zentralen Öffnung des zweiten Teilrads.

In einer weiteren bevorzugten Ausführungsform des ersten Aspekts der vorliegenden Erfindung umfasst die Stelleinrichtung eine Positionserfassungseinrichtung zum Erfassen einer aktuellen Drehposition des ersten Getrieberads des Getriebes, wobei das zweite Getrieberad Teil dieser Positionserfassungseinrichtung ist. Insbesondere kann das zweite Getrieberad ein Sensorelement eines Rotationspositionssensors tragen oder die Positionserfassungseinrichtung kann ein fünftes Getrieberad umfassen, welches mit dem zweiten Getrieberad, insbesondere mit beiden Teilrädern des zweiten Getrieberads, im Eingriff ist und welches ein Sensorelement eines Rotationspositionssensors trägt. Durch die Verwendung des zweiten Getrieberads, welches ein erstes und ein zweites Teilrad umfasst, so dass in der oben beschriebenen Weise ein Spiel zwischen dem ersten Getrieberad und dem zweiten Getrieberad reduziert wird, kann eine Genauigkeit der Positionserfassung signifikant verbessert werden. Insbesondere kann die durch das Spiel hervorgerufene Positionsungenauigkeit eliminiert werden.

Gemäß einem zweiten Aspekt der Erfindung wird die oben genannte erste Aufgabe gelöst durch eine elektromechanische Stelleinrichtung für ein Fahrrad, umfassend ein feststehendes Element, welches in Bezug auf einen Fahrradrahmen ortsfest angeordnet ist, ein bewegliches Element, welches in Bezug auf das feststehende Element beweglich ist, einen elektromechanischen Antrieb, welcher Antriebskraft für eine Bewegung des beweglichen Elements bereitstellt, wobei der elektromechanische Antrieb einen Motor und ein durch den Motor angetriebenes Getriebe aufweist und wobei das Getriebe wenigstens ein Stufenzahnrad mit wenigstens zwei koaxialen Zahnrädern unterschiedlicher Zahnzahl aufweist, wobei die beiden Zahnräder des Stufenzahnrads jeweils eine zentrale Öffnung aufweisen, in welche eine Getriebewelle eingesetzt ist.

Gemäß dem zweiten Aspekt der Erfindung sind somit beide Zahnräder des Stufenzahnrads von der Getriebewelle separat ausgebildet. Dabei können die beiden Zahnräder wiederum ebenfalls als separate, insbesondere aneinander befestigte Bauteile oder integral miteinander ausgebildet sein. Die separate Ausbildung der Zahnräder sowie der Getriebewelle erlaubt für die jeweiligen Elemente des Stufenzahnrads eine jeweils ihrem Einsatzzweck angepasste Konstruktion und Beschaffenheit. So kann das Material der Getriebewelle eine geringere Härte aufweisen, um einem Härteverzug, insbesondere bei längeren Getriebewellen, vorzubeugen, während das Material der Zahnräder eine größere Härte aufweisen kann, um auch größere Drehmomente zuverlässig und mit geringerem Verschleiß übertragen zu können. Ferner wird daran gedacht, dass wenigstens eines der beiden Zahnräder drehbar an der Getriebewelle gehalten ist, vorzugsweise beide Zahnräder drehbar sind. Die Drehkräfte des Getriebes werden somit nicht in die Getriebewelle eingeleitet, so dass eine kostengünstige drehfeste Montage der Getriebewelle erfolgen kann.

Nach einem dritten Aspekt der Erfindung wird die oben genannte erste Aufgabe gelöst durch eine Stelleinrichtung für ein Fahrrad, umfassend ein feststehendes Element, welches in Bezug auf einen Fahrradrahmen ortsfest angeordnet ist, ein bewegliches Element, welches in Bezug auf das feststehende Element beweglich ist, einen elektromechanischen Antrieb, welcher Antriebskraft für eine Bewegung des beweglichen Elements bereitstellt, wobei der elektromechanische Antrieb ein Gehäuse und einen in dem Gehäuse befestigten Motor umfasst, wobei die Stelleinrichtung ferner einen Motorträger aufweist, welcher erste Befestigungsmittel zur Befestigung des Motorträgers am Gehäuse und von den ersten Befestigungsmitteln separate zweite Befestigungsmittel zur Befestigung des Motors an dem Motorträger aufweist.

Durch die Bereitstellung eines separaten Motorträgers sowie separater Befestigungsmittel zur Befestigung des Motorträgers am Gehäuse einerseits und zur Befestigung des Motors am Motorträger andererseits ist es möglich, die Positionsgenauigkeit des Motors in Bezug auf das Gehäuse zu verbessern und gleichzeitig die Montage des Motors zu erleichtern. So können die ersten Befestigungsmittel speziell auf das Material des Gehäuses angepasst sein, um beispielsweise auch bei einem aus weicherem Material gebildeten Gehäuse eine präzise und stabile Positionierung zu gewährleisten, während die zweiten Befestigungsmittel für eine einfache und sichere Montage des Motors eingerichtet sein können.

In einer bevorzugten Ausführungsform können die ersten Befestigungsmittel dadurch realisiert sein, dass der Motorträger zumindest teilweise in das Material des Gehäuses eingebettet ist, insbesondere eingeformt ist. Der Motorträger kann hierfür beispielsweise spezielle Vorsprünge oder/und Aussparungen aufweisen, die einen besonders sicheren formschlüssigen Halt im Material des Gehäuses gewährleisten. Alternativ oder zusätzlich können eine Schraubverbindung oder eine Klebeverbindung als erste Befestigungsmittel zum Einsatz kommen.

Vorzugsweise ist das Gehäuse zur Gewichtsreduzierung aus einem Kunststoffmaterial gebildet. Der Motorträger kann dann beispielsweise aus Metall gebildet sein, um eine einfache und genaue Montage des Motors am Motorträger, beispielsweise durch eine Schraubverbindung, zu ermöglichen.

Eine zweite Aufgabe der vorliegenden Erfindung ist es, eine Stelleinrichtung für ein Fahrrad sowie ein Verfahren zur Steuerung oder Verstellung einer Stelleinrichtung für ein Fahrrad bereitzustellen, welche im Falle einer Funktionsstörung, insbesondere durch äußere mechanische Einflüsse, eine angemessene Reaktion der Stelleinrichtung sicherstellen und eine Beschädigung oder zu starke Beanspruchung der Stelleinrichtung vermeiden.

Nach einem vierten Aspekt der Erfindung wird die vorstehend genannte zweite Aufgabe gelöst durch ein Verfahren zur Steuerung einer Stelleinrichtung für ein Fahrrad, wobei die Stelleinrichtung umfasst: ein feststehendes Element, welches in Bezug auf einen Fahrradrahmen ortsfest angeordnet ist, ein bewegliches Element, welches in Bezug auf das feststehende Element beweglich ist, einen elektromechanischen Antrieb, welcher auf Basis eines Antriebssteuersignals Antriebskraft für eine Bewegung des beweglichen Elements bereitstellt, und eine Störungserfassungseinrichtung, welche eine Störung betreffend die Bewegung des beweglichen Elements erfasst, wobei das Verfahren die folgenden Schritte aufweist: Erzeugen eines ersten Antriebssteuersignals, um den elektromechanischen Antrieb mit einer ersten Antriebsleistung anzutreiben, wenn die Störungserfassungseinrichtung keine Störung erfasst, und Erzeugen eines zweiten Antriebssteuersignals, um den elektromechanischen Antrieb mit einer zweiten Antriebsleistung anzutreiben, wenn die Störungserfassungseinrichtung eine Störung erfasst, wobei die zweite Antriebsleistung kleiner als die erste Antriebsleistung, jedoch größer als Null ist.

Gemäß dem vierten Aspekt der Erfindung wird der Motor im Falle der Erfassung einer Störung somit mit einer reduzierten Antriebsleistung weiter betrieben. Damit ist es einerseits möglich, eine Überlastung des Motors bzw. des Getriebes zu vermeiden, indem die Antriebsleistung reduziert wird. Andererseits ist die zweite Antriebsleistung jedoch größer als Null, so dass die Stelleinrichtung weiterhin den Versuch unternimmt, den gewünschten Stellvorgang auszuführen. Liegt also nur eine temporäre Beeinträchtigung der Bewegungsfreiheit des beweglichen Elements vor, so kann die gewünschte Bewegung dennoch ausgeführt werden, ohne dass der Fahrer einen erneuten Bedienbefehl geben muss.

Hier ist anzumerken, dass Stelleinrichtungen in der Regel derart ausgelegt sind, dass die an dem elektromechanischen Antrieb anliegende Antriebsleistung deutlich größer ist als die für eine Bewegung des beweglichen Elements gerade benötigte Leistung. Auf diese Weise wird sichergestellt, dass ein schneller und zuverlässiger Stellvorgang auch dann gewährleistet ist, wenn durch Verschleiß oder Verschmutzung die Reibungskräfte innerhalb der Stelleinrichtung erhöht sind. Die Erfindung des vierten Aspekts macht sich diesen Spielraum zunutze, um auch nach Erfassung einer Störung noch eine Zeit lang eine reduzierte zweite Antriebsleistung aufrecht zu erhalten und weiterhin zu versuchen, die gewünschte Stellbewegung doch noch vorzunehmen. Während dieser Zeit wird die Stelleinrichtung jedoch nicht übermäßig beansprucht. Erst wenn die Störung einen längeren Zeitraum anhält, kann eine vollständige Abschaltung der Antriebsleistung und eine Fehlermitteilung erfolgen.

Die Erfassung einer Störung kann auf Grundlage eines Signals einer Positionserfassungseinrichtung erfolgen. Beispielsweise kann ein Getriebe des elektromechanischen Antriebs einen Rotationspositionssensor aufweisen, welcher eine Drehstellung eines der Getrieberäder des Getriebes erfasst. Nach dem Verfahren des vierten Aspekts der Erfindung kann dann eine Störung erfasst werden, wenn die Positionserfassungseinrichtung feststellt, dass trotz Anliegen einer Antriebsleistung keine Bewegung des elektromagnetischen Antriebs bzw. des beweglichen Elements stattfindet. Vorzugsweise wird dann nach Ablauf einer ersten Zeitdauer nach Feststellung der Störung das zweite Antriebssteuersignal erzeugt, um die Antriebsleistung auf die zweite Antriebsleistung zu reduzieren. In einer weiteren Variante wird der elektromechanische Antrieb gestoppt, wenn die Störung eine vorbestimmte zweite Zeit andauert, nachdem das zweite Antriebssignal erzeugt wurde.

In einer weiteren Ausführungsform der Erfindung des vierten Aspekts kann die Stelleinrichtung ferner eine Überlastkupplung aufweisen, welche funktionsmäßig zwischen einer Antriebsquelle des elektromechanischen Antriebs und einem Ausgangsglied des elektromechanischen Antriebs angeordnet ist und welche eine Übertragung von Antriebskraft von der Antriebsquelle zu dem Ausgangsglied unterbricht, wenn eine an der Überlastkupplung wirkende Kraft einen vorbestimmten Überlastschwellwert überschreitet. Eine derartige Überlastkupplung kann den Kraftweg zwischen dem beweglichen Element und der Antriebsquelle im Fall einer außergewöhnlichen Belastung, zum Beispiel durch einen Schlag oder eine Verklemmung der Stelleinrichtung, unterbrechen, um eine Beschädigung der Antriebsquelle oder anderer Elemente des elektromechanischen Antriebs zu vermeiden. Beispielsweise kann eine Rutschkupplung mit definiertem und ggf. einstellbarem Überlastschwellwert zum Einsatz kommen.

In einer Weiterbildung dieser Ausführungsform ist vorgesehen, dass die erste Antriebsleistung derart bemessen ist, dass im Falle einer Blockierung der Bewegung des Ausgangsglieds die an der Überlastkupplung wirkende Kraft größer ist als der Überlastschwellwert, so dass der Antrieb mit der ersten Antriebsleistung die Überlastkupplung auslösen würde, während die zweite Antriebsleistung derart bemessen ist, dass im Falle einer Blockierung der Bewegung des Ausgangsglieds die an der Überlastkupplung wirkende Kraft kleiner ist als der Überlastschwellwert, so dass die zweite Antriebsleistung nicht ausreicht, um die Überlastkupplung auszulösen. Durch diese Maßnahme kann sichergestellt werden, dass es im Falle einer Störung nicht zu einem wiederholten Auslösen der Überlastkupplung und damit einhergehender Geräuschentwicklung sowie einer besonderen Beanspruchung der Überlastkupplung kommt und dennoch die Bemühungen zur Bewegung der Stelleinrichtung fortgesetzt werden.

Es ist eine dritte Aufgabe der Erfindung, eine Stelleinrichtung für ein Fahrrad, insbesondere für eine Schaltung eines Fahrrads bereitzustellen, welche eine genauere Einstellung und Abstimmung der Stelleinrichtung auf die konkrete Einbausituation erlaubt oder/und eine Kompensation von Verschleißerscheinungen ermöglicht und auf diese Weise einen präziseren Betrieb sicherstellt.

Nach einem fünften Aspekt der Erfindung wird die dritte Aufgabe gelöst durch eine Stelleinrichtung für ein Fahrrad, umfassend ein feststehendes Element, welches in Bezug auf einen Fahrradrahmen ortsfest angeordnet ist, ein bewegliches Element, welches in Bezug auf das feststehende Element beweglich ist, eine Betätigungseinrichtung, welche die Auswahl einer gewünschten Schaltstufe aus einer Mehrzahl von verfügbaren Schaltstufen erlaubt und welche dafür eingerichtet ist, das bewegliche Element in eine der ausgewählten Schaltstufe entsprechende Schaltposition zu bewegen, sowie eine Trimmeinrichtung, welche eine Verstellung der den Schaltstufen zugeordneten Schaltpositionen erlaubt, wobei die Trimmeinrichtung dafür eingerichtet ist, für mindestens zwei Schaltstufen die zugeordneten Schaltpositionen um unterschiedliche Trimmbeträge zu verstellen.

Nach einem wichtigen Merkmal der Erfindung des fünften Aspekts ist die Trimmeinrichtung demnach in der Lage, unterschiedliche Schaltpositionen mit unterschiedlichen Trimmbeträgen zu verstellen (zu trimmen), wodurch die Möglichkeiten zur Anpassung und Nachjustierung der Stelleinrichtung vervielfältigt werden. So kann bei einer Montage eines Schaltwerks an einem Fahrrad nicht nur eine Positionierung der Stelleinrichtung in Bezug auf das Ritzelpaket insgesamt erfolgen, vielmehr können auch die Relativpositionen der einzelnen Schaltpositionen zueinander verändert werden, um auf Fertigungstoleranzen oder Verschleiß zu reagieren. Darüber hinaus können auch Schaltungenauigkeiten in extremen Schaltstufen aufgrund eines starken Schräglaufs der Kette und damit verbundenen axialen Kräften auf das Schaltwerk ausgeglichen werden.

Die Trimmeinrichtung kann insbesondere ein Einstellmittel aufweisen, um für mindestens zwei Schaltstufen, vorzugsweise für alle Schaltstufen, die Trimmbeträge relativ zueinander zu verstellen. In einer konstruktiv besonders einfachen Trimmeinrichtung können die Trimmbeträge mehrerer Schaltstufen, vorzugsweise aller Schaltstufen, durch einen einzelnen Einstellvorgang gleichzeitig relativ zueinander verstellt werden. Beispielsweise kann die Trimmeinrichtung dafür eingerichtet sein, für alle Schaltstufen einer Reihe aufeinanderfolgender Schaltstufen die jeweiligen Schaltpositionen mit jeweils zunehmenden Trimmbeträgen zu verstellen, oder für alle Schaltstufen für eine Reihe aufeinanderfolgender Schaltstufen die jeweiligen Schaltpositionen mit jeweils abnehmenden Trimmbeträgen zu verstellen. Auf diese Weise lassen sich insbesondere häufige Fehlstellungen zwischen den Schaltpositionen und den jeweiligen Ritzeln korrigieren, die in den extremen Schaltstufen (niedrigste oder höchste Schaltstufen) in stärkerem Maße auftreten. Hierzu zählt insbesondere auch die Korrektur von Schaltungenauigkeiten aufgrund einer starken Schräglage der Kette, wie sie insbesondere bei Ritzelpaketen mit einer hohen Anzahl an Ritzeln (zehn oder mehr Ritzeln, insbesondere zwölf Ritzel) oder/und bei kurzen Kettenlängen auftreten. Für die Korrektur einer starken Kettenschrägstellung kann es zum Beispiel vorteilhaft sein, wenn eine neutrale (z.B. mittlere) Schaltstufe entsprechend einer neutralen (z.B. mittleren) Schaltposition, in welcher keine oder nur eine geringe Kettenschrägstellung auftritt, einem vorbestimmten ersten Trimmbetrag zugeordnet wird und wenn Schaltstufen, deren Schaltpositionen schrittweise größeren Abstand von der Schaltposition der neutralen Schaltstufe aufweisen, schrittweise größere Trimmbeträge zugeordnet werden. Mit anderen Worten steigen die Trimmbeträge der Schaltstufen zu den Rändern hin, d.h. zu großen Schaltpositionen sowie zu kleinen Schaltpositionen hin, jeweils an. Vorzugsweise kann für eine solche Konfiguration auch eingestellt werden, wie groß dieser Anstieg jeweils ist.

Grundsätzlich wird vorgeschlagen, die Trimmfunktion gemäß dem fünften Aspekt der Erfindung sowohl für Stelleinrichtungen mit einem elektromechanischen Antrieb als auch für Stelleinrichtungen mit rein mechanischer Funktion zu verwenden. Wird ein elektromechanischer Antrieb eingesetzt, so können Trimmbeträge für die einzelnen Schaltstufen jeweils in einem Speicher abgelegt sein, insbesondere in Form verschiedener Trimmprogramme als jeweilige Datensätze mit Trimmwerten für jede Schaltstufe, oder können als Eingabewerte von einem Nutzer oder von einem anderen Gerät in die Stelleinrichtung eingegeben werden. Im Fall einer mechanischen Stelleinrichtung können mechanische Einstellmittel, wie etwa Einstellschrauben, zum Einsatz kommen, um die gewünschte Verstellung der Schaltpositionen vorzunehmen. Dabei wird insbesondere daran gedacht, dass die Betätigungseinrichtung ein Schaltsteuerkabel und einen Aufwickelkörper zum wahlweisen Aufwickeln oder Freigeben des Schaltsteuerkabels aufweisen kann, wobei der Aufwickelkörper dann ein Trimmelement aufweisen kann, mittels welchem eine Aufwickelkontur des Aufwickelkörpers verstellbar ist. Durch Beeinflussung der Aufwickelkontur lässt sich dann erreichen, dass sich eine Verstellung des Kabelzugs, während eines Trimmvorgangs, auf unterschiedliche Schaltpositionen im unterschiedlichen Maße auswirkt.

Nach einem sechsten Aspekt wird die oben genannte dritte Aufgabe der Erfindung gelöst durch eine Stelleinrichtung für ein Fahrrad, welche umfasst: ein feststehendes Element, welches in Bezug auf einen Fahrradrahmen ortsfest angeordnet ist, ein bewegliches Element, welches in Bezug auf das feststehende Element beweglich ist, einen elektromechanischen Antrieb, welcher Antriebskraft für eine Bewegung des beweglichen Elements bereitstellt, eine elektronische Steuereinrichtung, in welcher für eine Mehrzahl von Schaltstufen jeweils für jede Schaltstufe mindestens ein Schaltpositionsparameter gespeichert ist, der einer Schaltposition des beweglichen Elements in der jeweiligen Schaltstufe entspricht, wobei die Steuereinrichtung dafür eingerichtet ist, in Reaktion auf ein Schaltstufenauswahlsignal, das eine einzustellenden Schaltstufe repräsentiert, den elektromechanischen Antrieb auf Basis des Schaltpositionsparameters der einzustellenden Schaltstufe derart anzusteuern, dass das bewegliche Element die Schaltposition erreicht, wobei die Stelleinrichtung ferner eine Trimmeinrichtung aufweist, welche dafür eingerichtet ist, mindestens einen der Schaltpositionsparameter unabhängig von allen anderen der Schaltpositionsparameter auf Veranlassung eines Nutzers hin zu ändern.

Auch diese Stelleinrichtung erlaubt ein genaueres Trimmen oder Einstellen der Stelleinrichtung, um auf eine konkrete Einbausituation am Fahrrad oder auf Verschleißerscheinungen reagieren zu können, so dass ein präzises Schalten sichergestellt werden kann. Hierfür ist vorgesehen, dass in einer elektronischen Steuereinrichtung Schaltpositionsparameter für jede Schaltstufe gespeichert sind, welche jeweils Schaltpositionen des beweglichen Elements in der jeweiligen Schaltstufe repräsentieren. Erfindungsgemäß lassen sich die Schaltpositionsparameter unabhängig voneinander einstellen, so dass für die Anpassung oder das Trimmen der Stelleinrichtung maximale Freiheit geschaffen wird.

Vorzugsweise ist in der Stelleinrichtung für jede Schaltstufe der Mehrzahl von Schaltstufen jeweils ein Standardpositionsparameter gespeichert, welcher einer vorbestimmten Standardschaltposition des beweglichen Elements entspricht. Bei einer Anpassung der Stelleinrichtung müssen daher nur Korrekturen vorgenommen werden, sofern dies für eine bestimmte Schaltposition erforderlich ist. Außerdem kann die Stelleinrichtung schnell in einen Standardzustand zurückgesetzt werden. Der Schaltpositionsparameter kann beispielsweise eine Abweichung von dem Standardpositionsparameter repräsentieren und dann auch als Trimmparameter bezeichnet werden, was eine intuitive Bedienung erlaubt.

In einer bevorzugten Ausführungsform der Erfindung des fünften oder sechsten Aspekts umfasst die Stelleinrichtung einen Beschleunigungssensor, welcher eine Information über eine Vibration der Stelleinrichtung bereitstellt. Eine Vibration der Stelleinrichtung kann eine Aussage darüber enthalten, ob sich das bewegliche Element in einer für die jeweilige Schaltstufe optimalen Schaltposition befindet oder wie groß der Abstand der aktuellen Schaltposition von einer optimalen Schaltposition ist. Im Allgemeinen macht sich eine Fehlstellung zwischen dem beweglichen Elements und dem Ritzel, d.h. eine Abweichung der Schaltposition von einer optimalen Schaltposition, durch eine verstärkte Vibration oder Geräuschentwicklung der Stelleinrichtung bemerkbar, welche von Schwingungen der Kette, der Stelleinrichtung und des Ritzelpakets herrühren.

In einer weiteren bevorzugten Ausführungsform der Erfindung gemäß dem fünften oder sechsten Aspekt kann die Stelleinrichtung ferner einen auf einem tragbaren Gerät ausführbaren Programmcode umfassen, wobei der Programmcode dafür eingerichtet ist, das tragbare Gerät zur Ausführung der folgende Schritte anzusteuern: a) Empfangen einer Nutzereingabe zur Auswahl einer Schaltstufe der Mehrzahl von Schaltstufen, und b) Empfangen einer Nutzereingabe zur Einstellung oder/und Änderung des Schaltpositionsparameters. Auf diese Weise kann der Trimmvorgang unter Verwendung eines tragbaren Geräts, insbesondere eines Smartphones mit einer entsprechenden Smartphone-App, ausgeführt werden. Der Nutzer kann hierfür eine gültige Schaltstufe einstellen und im Anschluss daran den Schaltpositionsparameter für diese Schaltstufe individuell verändern (den Trimmbetrag der Schaltstufe ändern), bis eine optimale Schaltposition erreicht ist.

Nach einem siebten Aspekt wird die oben genannte dritte Aufgabe der Erfindung gelöst durch ein Verfahren zur Einstellung einer Stelleinrichtung nach einem der vorhergehenden Aspekte, wobei das Verfahren die folgenden Schritte umfasst: Auswählen einer Schaltstufe, Abrufen eines gespeicherten Schaltpositionsparameters, der einer Schaltposition eines beweglichen Elements der Stelleinrichtung in der jeweiligen Schaltstufe zugeordnet ist, aus einem Speicher, Ändern des Schaltpositionsparameters, Speichern des geänderten Schaltpositionsparameters in dem Speicher. Mit diesem Verfahren lässt sich die Stelleinrichtung für jede Schaltstufe individuell anpassen bzw. trimmen. Das Verfahren kann dabei insbesondere unter Verwendung eines tragbaren Geräts, insbesondere eines Smartphones mit entsprechender App, durchgeführt werden.

Zur weiteren Unterstützung der Trimmfunktion nach dem vorstehend genannten Verfahren kann vorgesehen werden, dass das Verfahren ferner die folgenden Schritte umfasst:
a. Einstellen einer ausgewählten Schaltstufe durch die Stelleinrichtung,
b. Erfassen eines Funktionsparameters der Stelleinrichtung, welcher eine Genauigkeit der Schaltstufeneinstellung repräsentiert,
c. Verstellen des Schaltpositionsparameters derart, dass sich der Funktionsparameter im Sinne einer Verbesserung der Genauigkeit der Schaltstufeneinstellung ändert,
d. Abspeichern des in Schritt c eingestellten Schaltpositionsparameters.

Der Funktionsparameter der Stelleinrichtung, der eine Genauigkeit der Schaltstufeneinstellung repräsentiert, kann dabei beispielsweise eine Schwingung oder Vibration der Einstelleinrichtung repräsentieren, so dass der Schaltpositionsparameter im Sinne einer Reduzierung der Schwingung verstellt wird.

In einer Weiterbildung des beschriebenen Verfahrens ist die Steuereinrichtung zur Ausführung eines automatischen Einstellprozesses eingerichtet, wobei in dem Einstellprozess die folgenden Schritte selbsttätig ausgeführt werden:
a. Einstellen der Stelleinrichtung in eine erste Schaltstufe einer Mehrzahl von Schaltstufen,
b. Einstellen der Position des beweglichen Elements auf eine Mehrzahl von Positionen innerhalb eines vorbestimmten Intervalls um die Schaltposition der eingestellten Schaltstufe und Erfassung einer Schwingung der Stelleinrichtung für jede eingestellte Position,
c. Einstellen des Schaltpositionsparameters auf einen Wert, der der Position des beweglichen Elements entspricht, an welcher die geringste Schwingung erfasst wurde,
d. Einstellen der Stelleinrichtung in eine weitere Schaltstufe der Mehrzahl von Schaltstufen,
e. Wiederholen der Schritte b bis d, bis alle Schaltstufen der Mehrzahl von Schaltstufen wenigstens einmal eingestellt wurden.

Mittels eines solchen Verfahrens kann der Einstellvorgang bzw. das Trimmen der Stelleinrichtung im Wesentlichen automatisiert vorgenommen werden, beispielsweise während der Fahrt, um möglichst realistische Bedingungen für den Einstellvorgang zu bieten.

Die Erfindung wird nachfolgend anhand bevorzugter Ausführungsbeispiele unter Bezugnahme auf die beigefügten Zeichnungen näher erläutert. Es zeigen:
- Fig. 1: eine Gesamtansicht eines Fahrrads gemäß einem ersten Ausführungsbeispiel der Erfindung,
- Fig. 2: eine Ansicht eines hinteren Schaltwerks des Fahrrads des ersten Ausführungsbeispiels in einem am Fahrrad montierten Zustand,
- Fig. 3: eine perspektivische Ansicht des Schaltwerks des ersten Ausführungsbeispiels,
- Fig. 4 bis 6: verschiedene perspektivische Ansichten des Schaltwerks des ersten Ausführungsbeispiels, wobei einige Komponenten des Schaltwerks aus Illustrationsgründen ausgeblendet wurden,
- Fig. 7: eine Explosionsansicht eines Teils des Schaltwerks des ersten Ausführungsbeispiels,

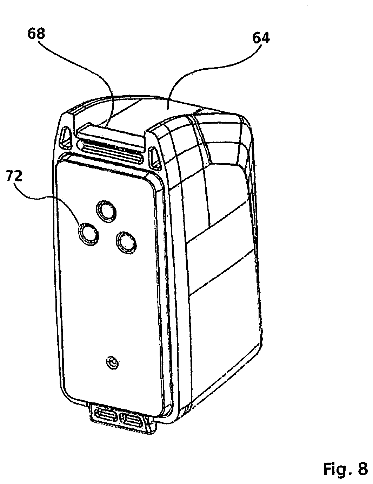

- Fig. 8: eine Batterie des hinteren Schaltwerks des ersten Ausführungsbeispiels,
- Fig. 9 bis 12: perspektivische Darstellungen eines unteren Getriebegehäuseteils, in welchen die schrittweise Montage eines Motorträgers sowie eines Motors des Ausführungsbeispiels illustriert sind,
- Fig. 13 und 14: perspektivische Ansichten eines unteren Getriebegehäuseteils sowie des Motors und eines Getriebes der Stelleinrichtung des Ausführungsbeispiels, wobei einzelne Elemente zu Illustrationszwecken ausgeblendet sind,
- Fig. 15: eine perspektivische Ansicht einer Positionserfassungseinrichtung gemäß dem Ausführungsbeispiel der Erfindung,
- Fig. 16: eine Querschnittsansicht eines zweiten Getrieberads des Ausführungsbeispiels in einer die Drehachse enthaltenden Schnittansicht,
- Fig. 17: eine perspektivische Ansicht eines Stufenzahnrads des Ausführungsbeispiels der Erfindung,
- Fig. 18: ein Blockschaltbild einer elektronischen Steuereinrichtung gemäß dem Ausführungsbeispiel der Erfindung,
- Fig. 19: ein Flussdiagramm, welches ein Verfahren zur Steuerung der Stelleinrichtung des Ausführungsbeispiels zeigt,
- Fig. 20a: ein Weg-Zeit-Diagramm, welches eine Stellbewegung eines beweglichen Elements des Ausführungsbeispiels illustriert,
- Fig. 20b: ein Spannungs-Zeit-Diagramm, welches eine Motorspannung des Motors des Ausführungsbeispiels während eines Stellvorgangs illustriert,
- Fig. 21: eine schematische Illustration eines vorderen Kettenblatts, einer Stelleinrichtung gemäß dem Ausführungsbeispiel sowie eines Ritzelpakets,
- Fig. 22: eine Schalttabelle für die Stelleinrichtung des Ausführungsbeispiels,
- Fig. 23: ein Flussdiagramm, welches ein Verfahren gemäß einer ersten Variante zum Trimmen der Stelleinrichtung des Ausführungsbeispiels illustriert,
- Fig. 24: ein Flussdiagramm, welches ein Verfahren gemäß einer zweiten Variante zum Trimmen der Stelleinrichtung des Ausführungsbeispiels illustriert,
- Fig. 25: ein Flussdiagramm, welches ein Verfahren gemäß einer dritten Variante zum Trimmen der Stelleinrichtung des Ausführungsbeispiels illustriert.

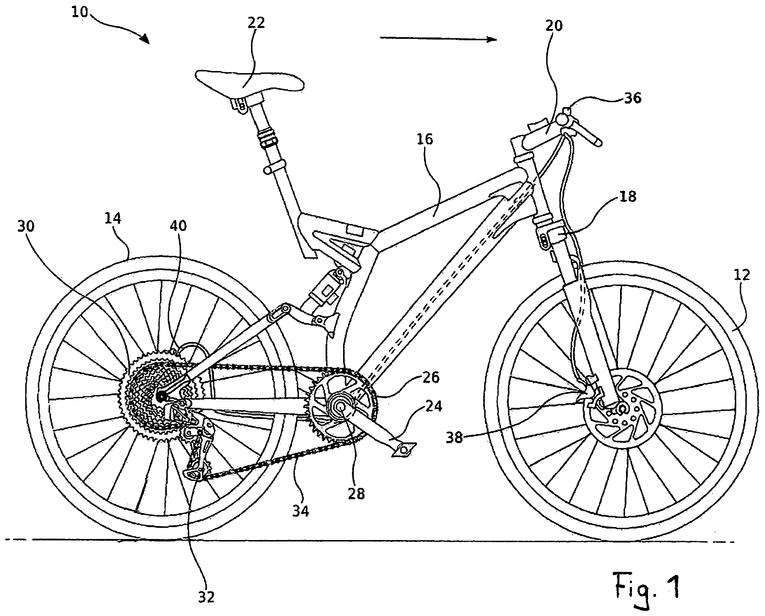

Ein in Figur 1 allgemein mit 10 bezeichnetes Fahrrad weist in an sich bekannter Weise ein Vorderrad 12, ein Hinterrad 14 und einen Rahmen 16 auf. Das Vorderrad 12 ist drehbar an unteren Enden einer Vorderradgabel 18 gelagert, welche an ihrem oberen Ende drehbar am Rahmen 16 gehalten ist und einen Lenker 20 zum Steuern des Fahrrads 10 trägt. Das Hinterrad 14 ist um eine Drehachse A drehbar an einem hinteren Ende des Rahmens 16 gelagert.

Der Rahmen 16 trägt ferner einen Sattel 22 sowie eine Kurbelbaugruppe mit Tretkurbeln 24 und einem daran befestigten vorderen Kettenblatt 26. Die Kurbelbaugruppe ist um eine Tretlagerachse 28 drehbar am Rahmen montiert. Am Hinterrad 14 ist konzentrisch zur Radachse ein Ritzelpaket 30 montiert, welches eine Mehrzahl von Ritzeln unterschiedlicher Durchmesser, d.h. mit unterschiedlichen Zahnzahlen trägt. Im Ausführungsbeispiel ist ein Ritzelpaket mit insgesamt elf Ritzeln vorgesehen und das vordere Kettenblatt 26 ist als Einzelrad vorgesehen, so dass insgesamt elf Schaltstufen einstellbar sind. Im Rahmen der Erfindung können selbstverständlich andere Schaltungsauslegungen zum Einsatz kommen, insbesondere auch Mehrfachkettenblätter, zwischen denen mittels eines vorderen Kettenwerfers geschaltet werden kann.

Zur Einstellung der Schaltstufen des hinteren Ritzelpakets kommt eine hintere Kettenschaltung mit einem hinteren Schaltwerk 32 zum Einsatz, welches ebenfalls an einem hinteren Ende des Rahmens 16 befestigt ist und Teil einer der Stelleinrichtung des Ausführungsbeispiels der Erfindung bildet. Eine Kette 34 umläuft das Ritzelpaket 30 und das vordere Kettenblatt 26 und durchläuft das Schaltwerk 32, um Antriebskraft von dem vorderen Kettenblatt 26 auf das Ritzelpaket 30 und damit auf das Hinterrad 14 zu übertragen. Das Schaltwerk 32 ist dabei in der Lage, die Kette 34 in axialer Richtung bezüglich der Drehachse A des Hinterrads 14 zu verstellen, um die Kette 34 wahlweise mit einem der Ritzel des Ritzelpakets 30 auszurichten und dementsprechend auf das ausgewählte Ritzel zu führen.

Zur Einstellung des Schaltwerks in eine gewünschte Schaltstufe durch einen Fahrer ist am Lenker 20 ein Bedienelement 36 vorgesehen. Im illustrierten Ausführungsbeispiel überträgt das Bedienelement 36 Bedienbefehle zur Steuerung des Schaltwerks 32 drahtlos durch eine Funkverbindung zwischen einem im Bedienelement 36 integrierten Funksender und einem im Schaltwerk 32 integrierten Funkempfänger. Alternativ sind jedoch andere Varianten denkbar und im Rahmen der vorliegenden Erfindung nutzbar, um Bedienbefehle des Fahrers von einem Bedienelement an das Schaltwerk 32 zu übertragen, beispielsweise eine kabelgebundene Übertragung mittels einer elektrischen Signalleitung oder eine mechanische Verbindung mittels eines Schaltkabels.

Zu ergänzen ist, dass das Fahrrad vorzugsweise eine Bremsanlage, beispielsweise in Form einer vorderen Scheibenbremse 38 oder/und einer hinteren Scheibenbremse 40 umfasst.

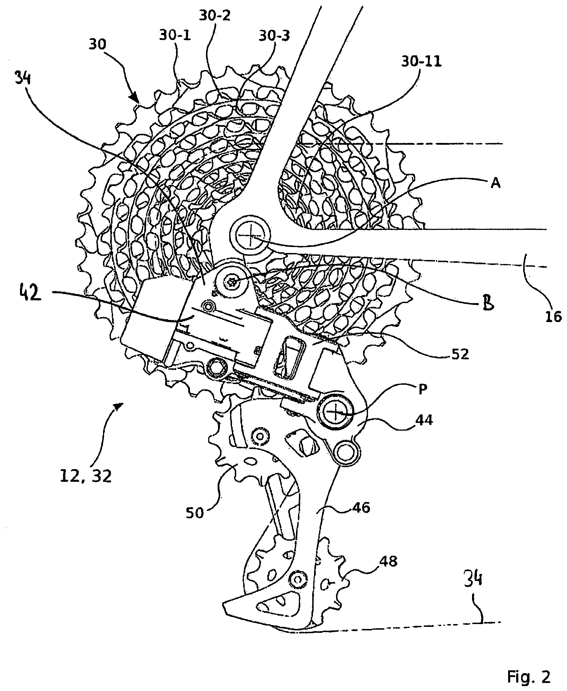

Figur 2 zeigt eine vergrößerte Darstellung eines hinteren Abschnitts des Fahrrads 10 im Bereich des Ritzelpakets 30 und des Schaltwerks 32. Zu erkennen ist, dass das Ritzelpaket 30 eine Mehrzahl von Ritzeln, im Ausführungsbeispiel elf Ritzel 30-1...30-11, umfasst, welche der Größe nach geordnet koaxial auf der Hinterradachse A aufeinandergestapelt sind und drehfest miteinander verbunden sind. Das größte Ritzel 30-1 kann dabei zum Beispiel 50 Zähne aufweisen, während das kleinste Ritzel 30-11 beispielsweise neun bis elf Zähne aufweisen kann. Die Ritzel 30-1...30-11 sind derart angeordnet, dass das größte Ritzel 30-1 weiter innen, d.h. näher an der Mittelebene des Hinterrads liegt, während das kleinste Ritzel 30-11 weiter außen, d.h. weiter entfernt von der Mittelebene angeordnet ist. Im Folgenden beziehen sich Richtungsangaben wie "innen", "außen", "oben", "unten", "vorn", "hinten", "seitlich" und ähnliche Angaben auf eine aufrechte, fahrbereite Position des Fahrrads 10 auf einem horizontalen Untergrund. Eine Richtung vom größten Ritzel 30-1 zum kleinsten Ritzel 30-11 hin wird als "nach außen" bezeichnet, während eine Richtung vom kleinsten Ritzel 30-11 zum größten Ritzel 30-1 hin als "nach innen" bezeichnet wird.

Das Schaltwerk 32 umfasst ein feststehendes Element 42, welches auch als "B-Knuckle" bezeichnet wird und welches einen Befestigungsabschnitt 43 zur Befestigung an dem Rahmen 16 aufweist, vorzugsweise unter Verwendung eines Schaltauges. Ferner umfasst das Schaltwerk 32 ein bewegliches Element 44, welches auch als "P-Knuckle" bezeichnet wird und in an sich bekannter Weise eine Kettenführungsanordnung 46 mit einem unteren Kettenführungsrad 48 und einem oberen Kettenführungsrad 50 trägt. Die Kettenführungsanordnung 46 ist um eine zur Achse A parallele Achse B drehbar an dem beweglichen Element 44 gehalten und durch eine nicht dargestellte Feder in Rückwärtsrichtung, d.h. in Figur 2 im Uhrzeigersinn, vorgespannt, um die Kette 34 gespannt zu halten und insbesondere die unterschiedlichen Kettenlaufwege um die unterschiedlich großen Ritzel 30-1...30-11 auszugleichen.

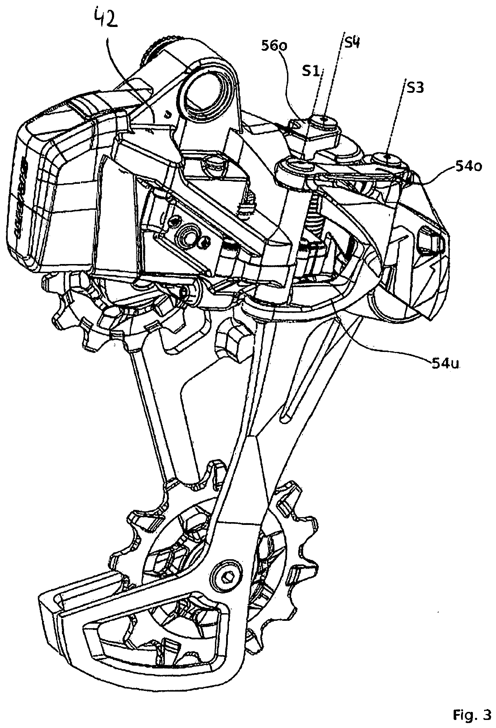

Das bewegliche Element 44 ist durch eine Gelenkanordnung 52 beweglich mit dem feststehenden Element 42 gekoppelt. Die Gelenkanordnung 52 ist insbesondere in den Figuren 3 bis 5 gut zu erkennen und kann wie im Ausführungsbeispiel vom Parallelogramm-Typ ausgebildet sein. Eine solche Gelenkanordnung 52 umfasst mindestens ein äußeres Schwenkelement, hier ein oberes äußeres Schwenkelement 54o und ein unteres äußeres Schwenkelement 54u, sowie mindestens ein inneres Schwenkelement, hier ein oberes inneres Schwenkelement 56o und ein unteres inneres Schwenkelement 56u. Erste Enden der oberen und unteren äußeren Schwenkelemente 54o, 54u sind an einer ersten Schwenkachse S1 schwenkbar am feststehenden Element 42 gelagert. Erste Enden der oberen und unteren inneren Schwenkelemente 56o, 56u sind an einer von der ersten Schwenkachse beabstandeten zweiten Schwenkachse S2 schwenkbar an dem feststehenden Element 42 gelagert. Den ersten Enden gegenüberliegende zweite Enden der oberen und unteren äußeren Schwenkelemente 54o, 54u sind an einer dritten Schwenkachse S3 schwenkbar am beweglichen Element 44 gelagert. Den ersten Enden gegenüberliegende zweite Enden der oberen und unteren inneren Schwenkelemente 56o, 56u sind an einer von der dritten Schwenkachse S3 beabstandeten vierten Schwenkachse S4 schwenkbar am beweglichen Element 44 gelagert. Die Schwenkachsen S1, S2, S3 und S4 bilden im Wesentlichen die Eckpunkte eines gelenkigen Parallelogramms und erlauben auf diese Weise eine Bewegung des beweglichen Elements 44 und damit der Kettenführungsanordnung 46 in axialer Richtung (parallel zur Hauptachse A) nach außen bzw. nach innen, um die Kette 34 von einem der Ritzel 30-1...30-11 zu einem anderen Ritzel zu führen.

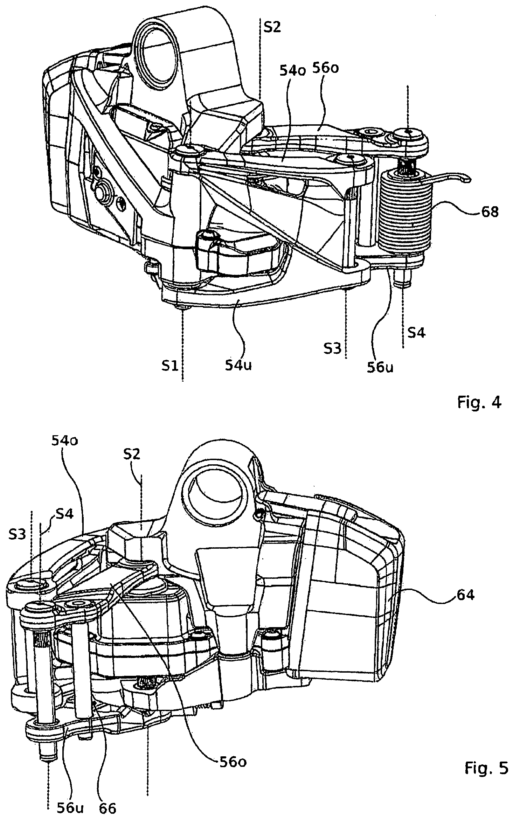

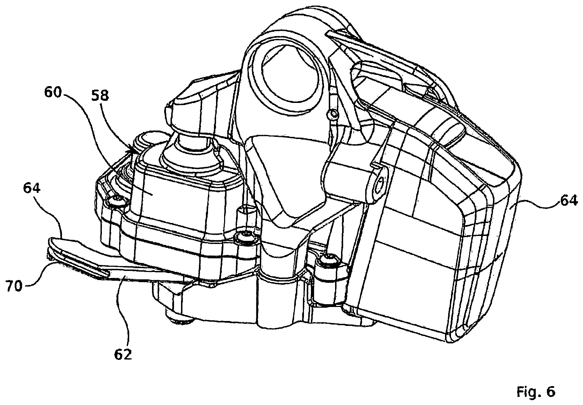

Das bewegliche Element 44 wird durch einen elektromechanischen Antrieb 58 bewegt (siehe auch Figur 6), welcher eine in einem Gehäuse 60 untergebrachte Motor-Getriebe-Baugruppe aufweist und Kraft zur Bewegung des beweglichen Elements an einem Ausgangsglied bereitstellt, welches mit der Gelenkanordnung 52 oder dem beweglichen Element 44 bewegungsübertragend gekoppelt ist. Im Ausführungsbeispiel ist das Ausgangsglied durch einen Antriebsarm 62 ausgebildet welcher einen Anschlag 64 aufweist, der an einem Gegenanschlag 66 (siehe Figur 5, Antriebsarm 62 zur Illustration hier ausgeblendet) des unteren inneren Schwenkelements 56u in Anlagekontakt ist, so dass er in der Lage ist, das untere innere Schwenkelement 56u in einer Richtung nach außen zu verschwenken und damit eine Bewegung des beweglichen Elements 44 nach außen zu bewirken. Ferner ist der Antriebsarm 62 unter der Spannung einer Feder 68 in Anlagekontakt mit dem unteren inneren Schwenkelement 56u gehalten, wobei sich die Feder 68 einerseits in einer Aufnahme 70 am Antriebsarm 62 und andererseits am beweglichen Element 44 abstützt. Die Feder 68 kann insbesondere auf der vierten Schwenkachse S4 gehalten und derart ausgelegt sein, dass sie das bewegliche Element 44 in eine Richtung nach innen vorspannt.

Um das Schaltwerk 32 zu einem kleineren Ritzel hin zu schalten, d.h. die Kettenführungsanordnung 46 in Richtung nach außen zu bewegen, wird der elektromechanische Antrieb 58 derart betrieben, dass der Antriebsarm 62 sich in Richtung nach außen bewegt und dabei über den Anschlag 64 und den Gegenanschlag 66 das untere innere Schwenkelement 56u direkt mitnimmt. Um das Schaltwerk 32 von einem kleineren Ritzel zu einem größeren Ritzel zu schalten, d.h. die Kettenführungsanordnung 46 in Richtung nach innen zu bewegen, wird der elektromechanische Antrieb 58 derart betrieben, dass sich der Antriebsarm 62 in eine Richtung nach innen bewegt. Durch die Kraft der Feder 68 wird die Gelenkanordnung 52 dieser Bewegung des Antriebsarms 62 nachgeführt, d.h. die Feder 68 hält den Gegenanschlag 66 des unteren inneren Schwenkelements 56u in Anlagekontakt mit dem Anschlag 64 des Antriebsarms 62. Über die Drehung des Ausgangsglieds des elektromechanischen Antriebs 58 und somit die Schwenkbewegung des Antriebsarms 62 kann somit unmittelbar auf die Position der Kettenführungsanordnung 46 eingewirkt werden und eine gewünschte Schaltposition entsprechend einer gewünschten Schaltstufe angefahren werden.

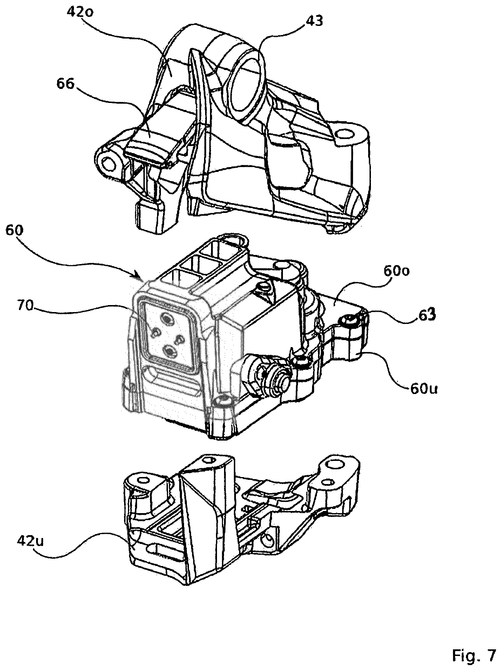

Figur 7 zeigt, dass das Getriebegehäuse 60 des elektromechanischen Antriebs 58 ist im illustrierten Ausführungsbeispiel aus einem oberen Getriebegehäuseteil 60o und einem unteren Getriebegehäuseteil 60u gebildet ist, welche durch geeignete Verbindungsmittel, hier Schraubverbindungen 63, miteinander befestigt sind und in ihrem Inneren einen Hohlraum zur Aufnahme der später zu beschreibenden Motor-Getriebe-Anordnung definieren. Das Getriebegehäuse 60 kann wiederum zwischen zwei Gehäuseteilen des feststehenden Elements aufgenommen sein, zum Beispiel zwischen einem oberen Gehäuseteil 42o, an welchem auch der Befestigungsabschnitt 43 zur Befestigung am Rahmen 16 angeordnet ist, und einem unteren Gehäuseteil 42u. Der obere Gehäuseteil 42o und der untere Gehäuseteil 42u können miteinander verschraubt werden, um das Getriebegehäuse 60 in einer genau vorbestimmten Position sicher und spielfrei zu fixieren.

Energie zum Betreiben des elektromechanischen Antriebs 58 wird im illustrierten Ausführungsbeispiel durch eine abnehmbare Batterie 64 bereitgestellt. Batterie 64 und Getriebegehäuse 60 sind sowohl mechanisch als auch elektrisch miteinander koppelbar bzw. voneinander trennbar. Mechanische Verbindungsmittel können beispielsweise durch einen Haken 66 gebildet sein, der in eine passende Vertiefung 68 der Batterie eingreift oder umgekehrt. Elektrische Verbindungsmittel können durch geeignete Stifte 70 und dazu passende Aussparungen 72 realisiert sein. Alternativ kann der elektromechanische Antrieb 58 durch eine entfernt angeordnete Energiequelle versorgt werden, welche durch ein elektrisches Kabel mit dem Antrieb 58 verbunden ist.

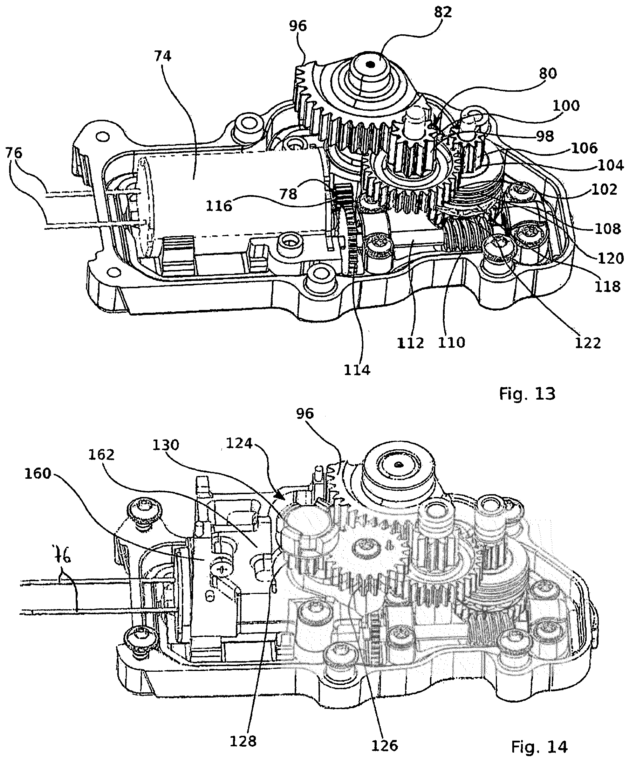

Figur 13 zeigt einen inneren Aufbau des elektromechanischen Antriebs 58, insbesondere eine Motor-Getriebe-Baugruppe, wobei in Figur 13 zur besseren Illustration einige Teile ausgeblendet sind. Die Motor-Getriebe-Baugruppe umfasst insbesondere einen Motor 74 mit elektrischen Anschlüssen 76 zum Anlegen einer Motorspannung sowie eine Motorausgangswelle 78. Die schnelle Drehung des Elektromotors 74 wird durch ein Getriebe 80 in eine langsame Drehung einer Getriebeausgangswelle 82 umgesetzt, welche den Antriebsarm 62 antreibt und insbesondere drehfest mit dem Antriebsarm gehalten sein kann.

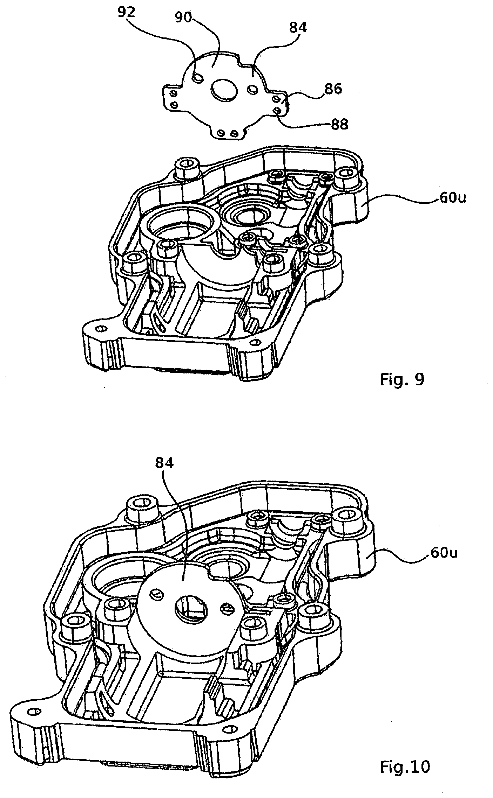

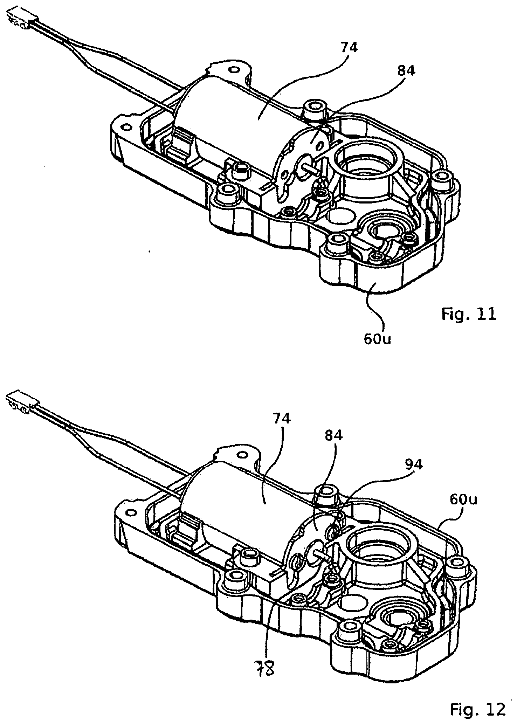

Unter Bezugnahme auf Figuren 9 bis 12 wird zunächst eine Montage des Elektromotors 74 am Getriebegehäuse 60, insbesondere am unteren Getriebegehäuseteil 60u näher erläutert.

Gemäß dem Ausführungsbeispiel der Erfindung ist ein Motorträger in Form einer Trägerplatte 84 vorgesehen, welche in einem ersten Schritt am unteren Getriebegehäuseteil 60u zu befestigen ist. Die Trägerplatte 84 ist dabei vorzugsweise aus einem Metall gebildet und weist daher hohe mechanische Festigkeit auf. Im Gegensatz dazu ist das Getriebegehäuse 60 aus einem Material mit geringerem Gewicht gebildet, insbesondere aus Kunststoff.

Die Trägerplatte 84 wird für eine sichere Montage am unteren Getriebegehäuseteil 60u zumindest teilweise in das Kunststoffmaterial des unteren Getriebegehäuseteils 60u eingebettet. Das Einbetten der Trägerplatte 84 kann während der Herstellung des unteren Getriebegehäuseteils 60u, beispielsweise während eines Spritzgussverfahrens, oder nachträglich nach der Verfestigung des unteren Getriebegehäuseteils 60u erfolgen. Vorzugsweise weist die Trägerplatte 84 mindestens einen Vorsprung 86 auf, welcher in das Kunststoffmaterial des unteren Getriebegehäuseteils 60u eingebettet wird.

Um eine besonders innige Verbindung zwischen der Trägerplatte 84 und dem Kunststoffmaterial des unteren Getriebegehäuseteils 60u weiter zu fördern, kann in dem wenigstens einen Vorsprung 86 ferner mindestens eine Durchgangsöffnung oder Aussparung 88 vorgesehen sein, in welche Kunststoffmaterial zumindest teilweise eindringen kann. Alternativ oder zusätzlich können Klebstoffe verwendet werden und die Trägerplatte 84 kann mit ihrem mindestens einen Vorsprung 86 in einer entsprechenden Aussparung des unteren Getriebegehäuseteils 60u eingeklebt werden.

Unabhängig von der Befestigungsvariante bleibt ein Montageabschnitt 90 der Trägerplatte 84 im eingebauten Zustand frei und ist für die Montage des Motors 74 zugänglich. Insbesondere weist der Montageabschnitt 90 zweite Befestigungsmittel 92 zur Befestigung des Motors 74 an der Trägerplatte 84 auf. Im Ausführungsbeispiel sind die zweiten Befestigungsmittel 92 durch Löcher realisiert, an welchen der Motor 74 durch Schrauben 94 angeschraubt werden kann. Der Montageabschnitt 90 ist dabei vorzugsweise plattenförmig ausgebildet und liegt im montierten Zustand flächig an einem plattenförmigen Abschnitt des Motors 74 an, beispielsweise einer Stirnseite des Motors 74, an welcher auch die Motorausgangswelle 78 austritt. Auf diese Weise wird eine zuverlässige, stabile und sehr präzise Positionierung des Motors und insbesondere der Motorausgangswelle 78 erreicht. Gleichzeitig kann die Montage des Motors 74 durch die zweiten Befestigungsmittel 92 in einem relativ einfachen Montagevorgang erfolgen.

Unter Bezugnahme auf die Figuren 13 bis 17 wird nachfolgend das Getriebe 80 näher erläutert. Dabei sind in den Figuren wiederum einige Bauteile aus Illustrationsgründen ausgeblendet. Fest mit der Getriebeausgangswelle 78 verbunden ist ein erstes Getrieberad 96, welches aus Platzgründen als Segmentrad ausgebildet ist, so dass es nur über seinen Betriebswinkel hinweg verzahnt ist und in anderen Umfangsabschnitten ausgespart ist. Das erste Getrieberad 96 ist im Eingriff mit einem kleinen Rad 98 eines ersten Stufenrads 100. Drehfest mit dem kleinem Rad 98 des ersten Stufenrads 100 verbunden ist ein großes Rad 102 des ersten Stufenrads 100, welches wiederum im Eingriff ist mit einem kleinen Rad 104 eines zweiten Stufenrads 106. Ein großes Rad 108 des zweiten Stufenrads 106 ist als Schneckenrad ausgebildet und steht im Eingriff mit einer Schnecke 110, die drehfest auf einer Schneckenwelle 112 angeordnet ist. Die Drehachsen des ersten Getrieberads 96, des ersten Stufenrads 100 sowie des zweiten Stufenrads 106 sind vorzugsweise parallel zueinander ausgerichtet, während die Schneckenwelle 112 vorzugsweise in einem Winkel von 90° zu der Drehachse des zweiten Stufenrads 106 verläuft.

Die Schneckenwelle 112 trägt ferner ein drittes Getrieberad 114, welches wiederum im Eingriff ist mit einem vierten Getrieberad 116, das drehfest auf der Motorausgangswelle 78 angeordnet ist. Das dritte Getrieberad 114 ist vorzugsweise größer als das vierte Getrieberad 116.

Im Ergebnis wird im Getriebe 80 dieses Ausführungsbeispiels die schnelle Drehung der Getriebeausgangswelle 78 über das vierte Getrieberad 116, das dritte Getrieberad 114, die Schneckenwelle 112, die Schnecke 110, das große Rad 108 des zweiten Stufenrads 106, das kleine Rad 104 des zweiten Stufenrads 106, das große Rad 102 des ersten Stufenrads 100, das kleine Rad 98 des erste Stufenrads 100 und das Getrieberad 96 in eine langsamere Drehung der Getriebeausgangswelle 82 umgesetzt. Es erfolgt also eine mehrstufige Untersetzung. Die Bauform des Getriebes 80 ist dabei als Beispiel zu verstehen, alternativ können Getriebe mit mehr oder weniger Getriebestufen oder mit anderen Untersetzungsmechanismen eingesetzt werden, sofern sie geeignet sind, die Drehzahl des Motors 74 ausreichend an die gewünschte Drehzahl der Getriebeausgangswelle 82 anzupassen.

Das Getriebe 80 kann ferner eine Überlastkupplung 118 aufweisen, welche an einer geeigneten Position in dem oben beschriebenen Kraftweg von der Motorausgangswelle 78 zur Getriebeausgangswelle 82 angeordnet sein kann. So können beispielsweise die kleinen und großen Räder der Stufenräder, die zur Drehkraftübertragung im Normalfall drehfest miteinander verbunden sind, bei einem der Stufenräderdrehbar zueinander gelagert sein. Im vorliegenden Ausführungsbeispiel ist dies beim zweiten Stufenrad 106 realisiert und die Überlastkupplung 118 ist zwischen dem kleinen Rad 104 und dem großen Rad 108 des zweiten Stufenrads 106 angeordnet. Die Überlastkupplung 118 kann zum Beispiel als Rutschkupplung ausgebildet sein und einen ersten Kupplungsteller 120 aufweisen, welcher fest mit dem kleinen Rad 104 des zweiten Stufenrads 106 verbunden ist, sowie einen zweiten Kupplungsteller 122 aufweisen, welcher fest mit dem großen Rad 108 des zweiten Stufenrads 106 verbunden ist. Der erste Kupplungsteller und der zweite Kupplungsteller sind miteinander in Reibeingriff, so dass sie Drehkraft übertragen, wenn ein zwischen dem ersten Kupplungsteller 120 und dem zweiten Kupplungsteller 122 wirkendes Differenzdrehmoment kleiner ist als ein vorbestimmtes Überlastdrehmoment, und relativ zueinander drehen, wenn das Differenzdrehmoment größer ist als das vorbestimmte Überlastdrehmoment. Vorzugsweise ist das Überlastdrehmoment einstellbar. Selbstverständlich kann die Überlastkupplung 118 statt am zweiten Stufenrad 106 alternativ oder zusätzlich am ersten Stufenrad 100 vorgesehen sein.

Das Getriebe 80 kann ferner einen Positionserfassungsmechanismus 124 aufweisen, welcher eine momentane Stellung oder Drehposition des Getriebes 80 fasst. Im vorliegenden Ausführungsbeispiel erfasst der Positionserfassungsmechanismus 124 eine Drehstellung des ersten Getrieberads 96. Hierfür kann der Positionserfassungsmechanismus 124 ein zweites Getrieberad 126 aufweisen, welches ebenfalls im Eingriff mit dem ersten Getrieberad 96 ist und andererseits wiederum mit einem fünften Getrieberad 128 im Eingriff ist, welches einen Positionssensor 130 trägt. Vorzugsweise sind die Drehachsen des zweiten Getrieberads 126 und des fünften Getrieberads 128 wiederum parallel zur Drehachse der Getriebeausgangswelle 82.

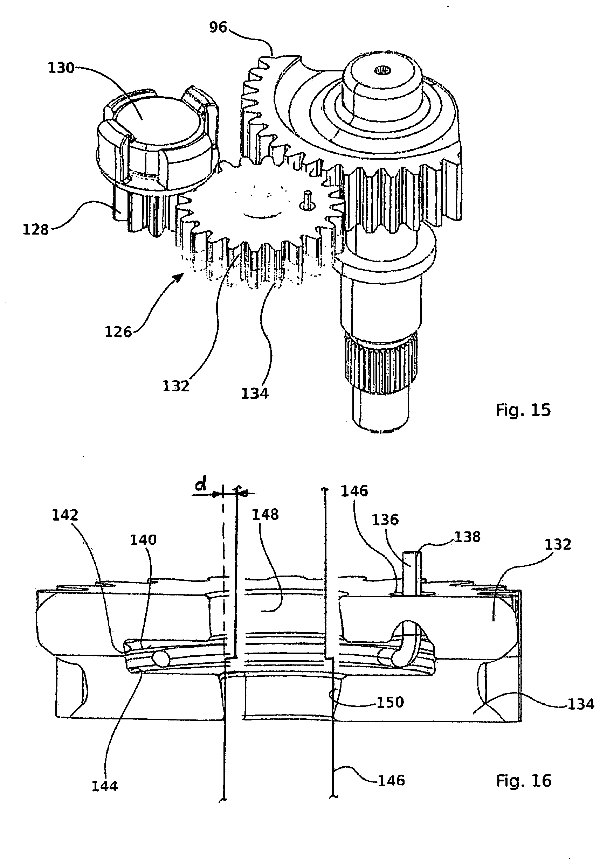

Der Positionssensor 130 kann ein an sich bekannter Encoder sein, der in magnetischer oder optischer Wechselwirkung mit einem gehäusefestgehaltenen Lesekopf (nicht dargestellt) tritt, um, insbesondere berührungslos, die Drehstellung des fünften Getrieberads 128 zu erfassen. Dementsprechend wichtig ist es, dass die Drehstellung des fünften Getrieberads 128 möglichst exakt einer bestimmten Drehstellung des ersten Getrieberads 96 zugeordnet werden kann. Hieraus entsteht die Anforderung, jegliches Spiel im Übertragungsweg von dem fünften Getrieberad 128 zum ersten Getrieberad 96 zu reduzieren. Gemäß einem Aspekt der Erfindung kommt hierfür ein Anti-Spiel-Mechanismus zum Einsatz, der nachfolgend unter Bezugnahme auf Figuren 15 und 16 näher erläutert wird.

Der Anti-Spiel-Mechanismus wird im Ausführungsbeispiel durch das zweite Getrieberad 126 realisiert, welches zwei koaxial zueinander gehaltene Teilräder 132, 134 umfasst. Die beiden Teilräder, ein oberes Teilrad 132 und ein unteres Teilrad 134, weisen gleiche Zahnzahl auf und sind beide gleichzeitig im Eingriff sowohl mit dem ersten Getrieberad 96 als auch mit dem fünften Getrieberad 128. Die Teilräder 132, 134 sind relativ zueinander um die Drehachse des zweiten Getrieberads 126 drehbar.

Die Relativdrehung der Teilräder 132, 134 wird dabei durch eine Kraft vorgespannt, welche im vorliegenden Ausführungsbeispiel durch eine Anti-Spiel-Feder 136 erzeugt wird. Die Anti-Spiel-Feder 136 ist vorzugsweise als Torsionsfeder ausgebildet und greift mit einem Ende 138 am oberen Teilrad 132 an, während ihr gegenüberliegendes Ende (nicht dargestellt) am unteren Teilrad 134 angreift. Vorzugsweise ist dabei der größte Teil der Anti-Spiel-Feder 136 platzsparend in einem Hohlraum 140 untergebracht, der zwischen dem oberen Teilrad 132 und dem unteren Teilrad 134 gebildet ist. Hierzu kann das obere Teilrad 132 eine dem unteren Teilrad 134 zugewandte erste Aussparung 142 aufweisen, welche als kreisförmige oder ringförmige Vertiefung gestaltet sein kann. Alternativ oder zusätzlich kann das untere Teilrad 134 eine zweite Aussparung 144 aufweisen, welche dem oberen Teilrad 132 zugewandt ist und welche als kreisförmige und ringförmige Vertiefung ausgestaltet sein kann. Der Eingriff des Endes 138 der Feder 136 mit dem oberen Teilrad 132 kann durch Einsetzen des Endes 138 in eine Öffnung 146 des oberen Teilrads 132 realisiert sein. In entsprechender Weise kann das andere Ende (nicht dargestellt) der Anti-Spiel-Feder 136 im Eingriff mit dem unteren Teilrad 134 gehalten werden.

Befindet sich das zweite Getrieberad 126 im Eingriff mit dem ersten Getrieberad 96 und dem fünften Getrieberad 128, so liegen die Flanken der Teilräder 132, 134 auf Grund der Spannkraft der Anti-Spiel-Feder 136 eng an den Flanken der Verzahnungen des ersten Getrieberads 96 und des fünften Getrieberads 128 an, so dass Spiel zwischen den Getrieberädern reduziert wird.

Mit einem weiteren bevorzugten Merkmal, welches ebenfalls in Figur 16 illustriert ist, kann der Anti-Spiel-Mechanismus dieses Ausführungsbeispiels das Spiel zwischen dem ersten Getrieberad 96 und dem fünften Getrieberad 128 noch weiter reduzieren. In Figur 16 ist zu erkennen, dass das untere Teilrad 134 auf einer Getriebewelle 146 des zweiten Getrieberads 126 mit geringerem Spiel gehalten ist als das obere Teilrad 132. Insbesondere kann das untere Teilrad 134 drehfest oder im Wesentlichen ohne Spiel drehbar auf der Getriebewelle 146 gehalten sein, während das obere Teilrad 132 mit einem vorbestimmten Spiel d zur Getriebewelle 146 gelagert ist. Dies kann durch eine Getriebewelle mit abschnittsweise unterschiedlichen Durchmessern realisiert werden, wobei die Getriebewelle 146 in einem oberen, das obere Teilrad 132 lagernden axialen Abschnitt einen geringeren Durchmesser aufweist als in einem unteren, das untere Teilrad 134 lagernden axialen Abschnitt. Alternativ könnte die Getriebewelle 146 umgekehrt im oberen axialen Abschnitt einen größeren Durchmesser aufweisen als im unteren axialen Abschnitt, so dass anstelle des oberen Teilrads 132 dann das untere Teilrad 134 ein radiales Spiel auf der Getriebewelle 146 erhält.

In einer nicht dargestellten Variante könnte ein Durchmesser einer oberen zentralen Aufnahmeöffnung 148 des oberen Teilrads 132, in welcher die Getriebewelle 146 aufgenommen ist, größer sein als ein Durchmesser einer unteren zentralen Aufnahmeöffnung 150 des unteren Teilrads 134, an welcher das untere Teilrad 134 an der Getriebewelle 146 gelagert ist. Selbstverständlich können auch hierbei die Durchmesserverhältnisse der zentralen Öffnungen 148, 150 umgekehrt sein, so dass anstelle des oberen Teilrads 132 dann das untere Teilrad 134 ein radiales Spiel auf der Getriebewelle 146 erhält.

Das Ergebnis eines Spiels d der oben beschriebenen Art ist ein vorbestimmtes radiales Spiel des oberen Teilrads 132 gegenüber der Getriebewelle 146 und damit auch gegenüber dem unteren Teilrad 134.

Dabei kann die radiale Bewegung ebenfalls durch die Kraft der Anti-Spiel-Feder 136 vorgespannt sein, so dass die Anti-Spiel-Feder 136 Doppelfunktion innehat. Durch das zusätzliche radiale Spiel d kann eine noch bessere Passung zwischen dem oberen Teilrad 132 und dem ersten Getrieberad 96 sowie dem fünften Getrieberad 128 erreicht werden, so dass eine zusätzliche Spielreduzierung erfolgt. Anzumerken ist aber, dass festgestellt werden konnte, dass auch ohne das zusätzliche Merkmal eines radialen Spiels eines der beiden Teilräder 132, 134 bereits durch die Relativdrehung der beiden Teilräder 132, 134 eine sehr gute und signifikante Spielreduzierung erreicht werden kann.

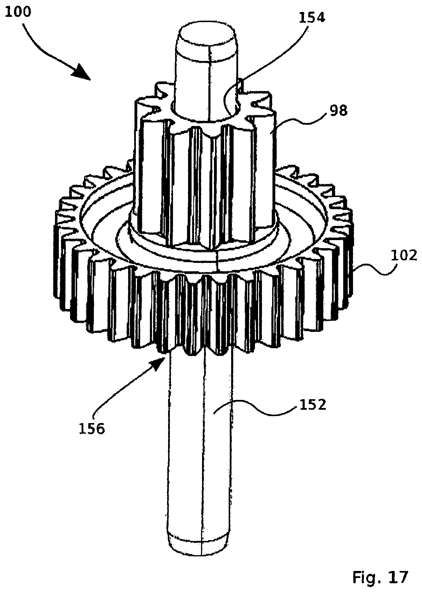

Figur 17 zeigt den Aufbau des ersten Stufenrads 100. Gemäß einem Aspekt der Erfindung können das kleine Rad 98 sowie das große Rad 102 jeweils separat von einer Getriebewelle 152 ausgebildet sein, welche die Drehachse des ersten Stufenrads 100 bildet. Das bedeutet, dass das kleine Rad 98 eine Durchgangsöffnung 154 aufweist, durch welche die Getriebewelle 152 hindurchgeführt ist, und das große Rad 102 eine Durchgangsöffnung 156 aufweist, durch welche die Getriebewelle 152 ebenfalls hindurchgeführt ist. Das kleine Rad 98 und das große Rad 102 sind zueinander drehfest gehalten und können als separate Bauteile hergestellt und aneinander befestigt sein oder einteilig als integraler Baukörper ausgebildet sein. Kleines Rad 98 und großes Rad 102 sind vorzugsweise drehbar auf der Getriebewelle 152 gehalten, so dass die Getriebewelle 152 im Gehäuse befestigt werden kann.

Die beschriebene Bauweise erlaubt die Herstellung des kleinen Rads 98 und des großen Rads 102 aus einem Material, welches verschieden ist von dem Material der Getriebewelle 152. Beispielsweise können kleines Rad 98 und großes Rad 102 aus einem gehärteten Stahl hergestellt werden, um große Drehmomente zu übertragen und den Verschleiß der Zähne der Räder zu reduzieren, während die Getriebewelle 152 aus einem ungehärteten Stahl gebildet sein kann, um Härteverzug der Getriebewelle 152 entgegenzuwirken. Die in Bezug auf Figur 17 vorstehend beschriebenen Merkmale können alternativ oder zusätzlich am zweiten Stufenrad 106 oder an einem anderen Stufenrad des Getriebes 80 verwirklicht sein.

In der oben beschriebenen Weise wird Drehkraft des Motors 74 vermittels des Getriebes 80 und der Gelenkanordnung 52 in eine Bewegung des beweglichen Elements 44 umgesetzt, um das Schaltwerk 32 zur Einstellung der gewünschten Schaltstufe zu verstellen. Die Ansteuerung des Motors 74 erfolgt dabei durch eine elektronische Steuereinrichtung 160, welche schematisch in Figur 14 zu erkennen ist. Die elektronische Steuereinrichtung 160 steht mit den elektrischen Anschlüssen 76 in Verbindung (wenngleich in Figur 14 die elektrischen Anschlüsse 76 aus Illustrationsgründen im getrennten und von der elektronischen Steuereinrichtung 160 wegführenden Zustand dargestellt sind), um eine Motorspannung U an den Motor 74 anzulegen. Der Betrieb des Elektromotors 74 kann dabei in an sich bekannter Weise, beispielsweise über eine PWM-Steuerung (Pulse-Width-Modulation-Steuerung) erfolgen. Die elektronische Steuereinrichtung 160 wird ferner über die Kontakte 70, 72 von der Batterie 64 mit elektrischer Energie versorgt. Ferner weist die elektronische Steuereinrichtung 160 Empfangsmittel 162 auf, um Steuerungsbefehle von dem Bedienelement 36 oder von einem anderen Gerät zu empfangen. Grundsätzlich können hier an sich bekannte Signalübertragungsmittel verwendet werden, beispielsweise eine Verbindung unter Verwendung eines elektrischen Kabels oder, bevorzugt, eine kabellose Datenübertragung. Im letzteren Fall können die Empfangsmittel 162 einen Funkempfänger umfassen, welcher dafür eingerichtet ist, Funksignale von einem Funksender des Bedienelements 36 zu empfangen. Insbesondere kann hier eine aus der US 2014/0102237 A1 bekannte drahtlose Steuerung zum Einsatz kommen.

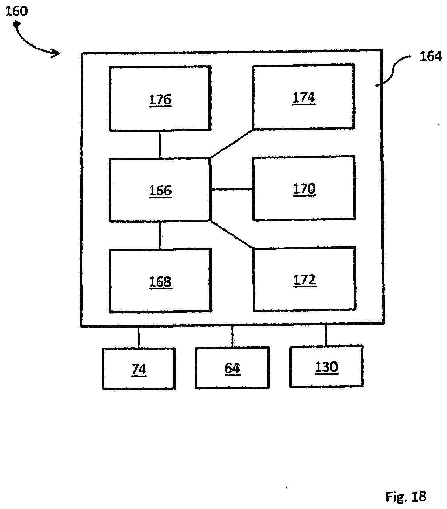

Figur 18 zeigt als schematische Blockdarstellung ein Beispiel für eine elektronische Steuereinrichtung 160 der vorstehend beschriebenen Art, welche auf einer Schaltplatine 164 implementiert ist und elektrisch mit dem Motor 74, der Batterie 64 und dem Positionssensor 130 verbunden ist. Die Schaltplatine 164 ist vorzugsweise ebenfalls im Getriebegehäuse 60 untergebracht. Auf der Schaltplatine 164 sind vorzugsweise eine CPU 166 sowie ein mit der CPU 166 verbundener Speicher 168 installiert. Die Schaltplatine 164 kann ferner ein Funkmodul 170 tragen, welches Empfangsmittel 162 der vorstehend beschriebenen Art bildet. Ferner kann die Schaltplatine 164 einen Beschleunigungssensor 172 tragen, welcher eine Vibration oder Bewegung des Schaltwerks 32 erfassen und ein entsprechendes Signal an die CPU 166 weitergeben kann. Darüber hinaus kann ein Funktionsschalter 174 zum Schalten der elektronischen Steuereinrichtung 160 zwischen verschiedenen Betriebsmodi, zum Zurücksetzen, zum Ein- oder Ausschalten oder dergleichen an der Schaltplatine 164 angebracht sein. Darüber hinaus kann ein Anzeigeelement, beispielsweise in Form einer LED 176 auf der Schaltplatine 164 installiert und mit der CPU 166 verbunden sein, um Betriebszustände der elektronischen Steuereinrichtung 160 optisch zu signalisieren.

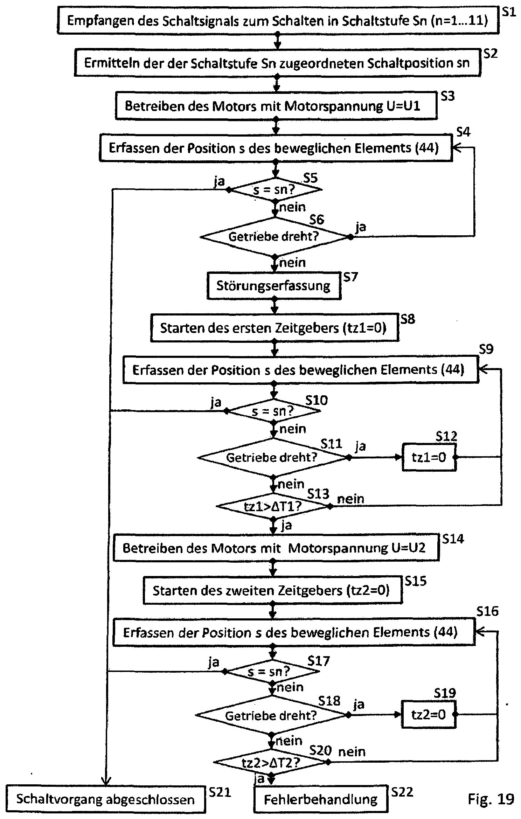

Unter Bezugnahme auf Figur 19 wird nachfolgend ein Verfahren zur Steuerung der Stelleinrichtung 10 gemäß dem Ausführungsbeispiel näher erläutert. Das Verfahren kann insbesondere durch ein in der CPU 166 ablaufendes Programm implementiert sein.

In einem ersten Schritt S1 empfängt das Funkmodul 170 ein Schaltstufenauswahlsignal, beispielsweise das Schaltsignal eines Fahrers zum Einstellen des Schaltwerks in eine bestimmte Schaltstufe Sn, ausgewählt aus der Anzahl an zur Verfügung stehenden Schaltstufen (im Ausführungsbeispiel elf Schaltstufen). In einem nachfolgenden Schritt S2 ermittelt die elektronische Steuereinrichtung 160 eine der Schaltstufe Sn zugeordnete Schaltposition sn. Hierzu kann die CPU 166 eine im Speicher 168 gespeicherte Schalttabelle auslesen, welche für jede zur Verfügung stehende Schaltstufe eine zugeordnete Schaltposition enthält.

In einem nachfolgenden Schritt S3 wird der Motor 74 mit einer Motorspannung U1 betrieben und sodann erfasst die Stelleinrichtung 10 im Schritt S4 die Position s des beweglichen Elements 44. Insbesondere kann die Position s aus einer Ausgabe des Positionssensors 130 bestimmt werden, welche die Drehwinkelstellung des ersten Getrieberads 96 repräsentiert. Wird im Schritt S5 festgestellt, dass die Position s des beweglichen Elements die Schaltposition sn der gewünschten Schaltstufe Sn erreicht hat, so wird im Schritt S21 der Schaltvorgang abgeschlossen. Dies entspricht dem Fall, dass der Schaltvorgang erfolgreich ausgeführt werden konnte.

Wird in Schritt S5 festgestellt, dass die Position s des beweglichen Elements die Schaltposition sn noch nicht erreicht hat, so wird im Schritt S6 geprüft, ob sich das Getriebe dreht, was vorzugsweise ebenfalls durch Abfrage des Positionssensors 130, z.B. durch Abfrage einer zeitlichen Änderung der Ausgabe des Positionssensors 130, erfolgen kann. Dreht sich das Getriebe nicht (obwohl die Schaltposition sn noch nicht erreicht ist), so schließt das Verfahren auf eine Störung (Schritt S7), hervorgerufen beispielsweise durch Blockierung des beweglichen Elements 44, durch übermäßigen Verschleiß oder ähnliches. Dreht sich das Getriebe dagegen noch (S6 JA), so kehrt das Verfahren zurück zum Schritt S4. Die Schritte S4 bis S6 bilden somit eine Warteschleife für eine Störungserfassung, in welcher wiederholt die Position s des beweglichen Elements abgefragt wird und ermittelt wird, ob das bewegliche Element irgendwann die gewünschte Schaltposition erreicht oder ob es zu einer Störung kommt.

Wir eine Störung erfasst, so startet das Verfahren im Schritt S8 einen ersten Zeitgeber tz1, d.h. tz1 wird auf null gesetzt. Im Anschluss erfasst das Verfahren im Schritt S9 erneut die Position s des beweglichen Elements 44 und prüft im Anschluss daran im Schritt S10, ob die Schaltposition sn mittlerweile erreicht wurde oder nicht. Wurde die Schaltposition sn erreicht, so endet das Verfahren im Schritt S21. Wurde die Schaltposition noch nicht erreicht, so wird im Schritt S11 erneut geprüft, ob sich das Getriebe mittlerweile dreht. Steht das Getriebe weiterhin still (S11 NEIN), so wird im Schritt S13 geprüft, ob die von dem ersten Zeitgeber gemessene Zeit tz1 bereits eine vorbestimmte erste Zeitdauer ΔT1 überschritten hat oder nicht. Wurde die erste Zeitdauer ΔT1 noch nicht überschritten, so kehrt das Verfahren zurück zum Schritt S9, erfasst also erneut die Position s des beweglichen Elements 44 und fragt eine Drehung des Getriebes ab, wobei der Motor weiterhin mit der Motorspannung U1 betrieben wird. Sollte das Getriebe sich zwischenzeitlich wieder bewegen (S11 JA), so wird im Schritt S12 der Zeitgeber tz1 auf null zurückgesetzt, da das Verfahren nun davon ausgeht, dass die Störung behoben ist und nach einiger Zeit die Schaltposition sn erreicht wird (S10 JA).

Wenn dagegen in Schritt S13 festgestellt, dass die erste Zeitdauer ΔT1 überschritten wurde, der Schaltvorgang also auch nach Ablauf einer Zeit ΔT1 nach Erfassung der Störung nicht erfolgreich abgeschlossen werden konnte (S13 JA), so wird in einem folgenden Schritt S14 der Motor mit einer zweiten Motorspannung U2 betrieben, welche kleiner ist als die erste Motorspannung U1. Insbesondere sind die Motorspannungen U1 und U2 angepasst an eine Grenzspannung Uc der Überlastkupplung 118. Die Grenzspannung Uc der Überlastkupplung ist diejenige Spannung, mit welcher der Elektromotor 74 zu betreiben ist, um in einem Falle, dass die Getriebeausgangswelle 82 blockiert ist, die Überlastkupplung 118 gerade auszulösen. Das heißt, dass bei einem Betreiben des Motors 74 mit der Grenzspannung Uc und bei blockierter Getriebeausgangswelle 82 an der Überlastkupplung 118 gerade das Überlastdrehmoment wirkt. U1 ist nun so gewählt, dass U1 größer Uc gilt. U2 ist so gewählt, dass U2 kleiner Uc gilt.

Das Verfahren schreitet dann weiter zum Schritt S15 und startet einen zweiten Zeitgeber tz2, d.h. setzt diesen auf 0. Es versteht sich, dass der erste und der zweite Zeitgeber lediglich Rechengrößen repräsentieren und durch einen gemeinsamen Taktgeber gesteuert werden können oder sich lediglich aus Differenzbildungen eines durchgehenden Taktgebers ergeben können.

In einem nachfolgenden Schritt S16 wird wiederum die Position s des beweglichen Elements 44 erfasst, woraufhin im Schritt S17 geprüft wird, ob die Position s des beweglichen Elements 44 die Schaltposition sn erreicht hat oder nicht. Wurde die gewünschte Schaltposition nun erreicht, so wird der Schaltvorgang erfolgreich abgeschlossen (S21). Wurde die gewünschte Schaltposition sn nicht erreicht, so fragt das Verfahren im Schritt S18 erneut eine Drehung des Getriebes ab. Steht das Getriebe still (S18 NEIN), so prüft das Verfahren im Schritt S20, ob der zweite Zeitgeber tz2 das Überschreiten einer zweiten Zeitdauer ΔT2 anzeigt oder nicht. So lange die zweite Zeitdauer ΔT2 noch nicht überschritten wurde (S20 NEIN), kehrt das Verfahren zum Schritt S16 zurück, so dass der Motor weiterhin mit der Motorspannung U2 betrieben wird und die Positionserfassung sowie die Abfrage der Getriebedrehung wiederholt werden. Wird dabei zwischenzeitlich festgestellt, dass sich das Getriebe wieder dreht (S18 JA), so wird in einem Schritt S19 der zweite Zeitgeber auf null zurückgesetzt, da davon ausgegangen wird, dass die Störung behoben ist und das bewegliche Element weiter in Richtung Schaltposition fährt.

Sollte bei stillstehendem Getriebe nach Ablauf der zweiten Zeitdauer ΔT2 die Schaltposition noch nicht erreicht sein (S18 NEIN, S20 NEIN JA), so stellt das Verfahren fest, dass der Schaltvorgang gescheitert ist und führt im Schritt S22 eine Fehlerbehandlung aus. Die Fehlerbehandlung kann die Ausgabe einer Fehlermeldung in Form eines optischen oder akustischen Signals, das Senden einer Fehlermitteilung durch das Funkmodul 170 oder ähnliches umfassen. Gegebenenfalls kann das Verfahren auch nach Abwarten einer weiteren dritten Zeitdauer ΔT3 einen erneuten Schaltversuch unternehmen, d.h. zum Schritt S3 zurückkehren. Alternativ kann das Verfahren abwarten, bis ein erneutes Schaltsignal vom Nutzer gesendet wird.

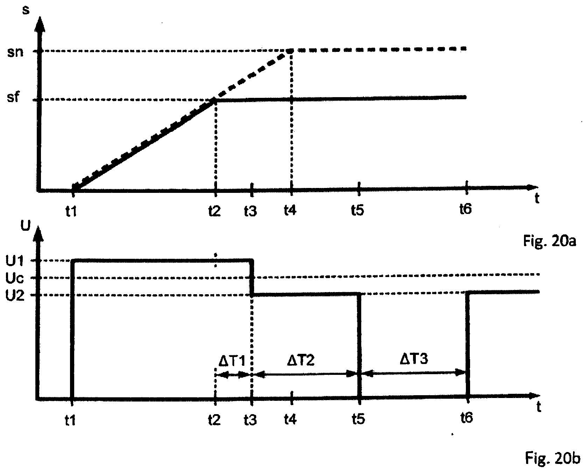

Figuren 20a und 20b zeigen die Wirkung des vorstehend beschriebenen Schaltverfahrens anhand zweier Zeitdiagramme, wobei die beiden Zeitachsen t der Figuren 20a und 20b gleiche Maßstäbe aufweisen, so dass Figuren 20a und 20b in Bezug auf die Zeitachse t miteinander verglichen werden können.

In Figur 20a ist durch eine gestrichelte Linie ein normaler, störungsfreier Schaltvorgang dargestellt. Nach Erhalt eines Schaltsignals zum Zeitpunkt t1 bewegt sich das bewegliche Element 44 zu der der gewünschten Schaltstufe entsprechenden Schaltposition sn und erreicht diese zu einem Zeitpunkt t4. Mit durchgezogener Linie ist das dagegen in Figur 20a der Fall einer Störung illustriert, in welcher die Bewegung des beweglichen Elements 44 beispielsweise durch äußere mechanische Einflüsse, Verschleiß oder Verschmutzung behindert wird. Das bewegliche Element erreicht dann nicht die gewünschte Schaltposition sn, sondern bleibt zu einem Zeitpunkt t2 bei einer Schaltposition sf, die verschieden von sn ist. Diese Störung zum Zeitpunkt t2 kann beispielsweise durch die Ausgabe des Positionserfassungselements 130 erfasst werden, welches anzeigt, dass sich die Position des beweglichen Elements 44 nicht mehr ändert oder nicht mehr in der erwarteten Weise ändert. Wie in Figur 20b zu erkennen ist, wird dann die Motorspannung U1 am Motor 74 noch für eine Zeitdauer ΔT1 aufrechterhalten. Für die Zeitdauer ΔT1 wird der Motor 74 somit noch mit voller Leistung versorgt, was auch dazu führen kann, dass die Überlastkupplung 118 auslöst, sofern die Störung anhält. Nach Ablauf der ersten Zeitdauer ΔT1 wird die Motorspannung zum Zeitpunkt t3 auf die reduzierte Motorspannung U2 reduziert, so dass die Überlastkupplung 118 in jedem Falle eingekoppelt bleibt bzw. wieder eingekoppelt wird. Für die Zeitdauer ΔT2 wird dann der Motor 74 mit der reduzierten Motorspannung U2 betrieben, um weiterhin zu versuchen, die gewünschte Schaltposition sn zu erreichen, wobei dann jedoch ein Auslösen der Überlastkupplung 118 vermieden wird. Nach Ablauf der zweiten Zeitdauer ΔT2 wird zu einem Zeitpunkt t5 die Motorspannung vorzugsweise auf 0 zurückgesetzt, so dass der Motor 74 vorzugsweise abgeschaltet wird. Ein erneuter Schaltversuch kann dann beispielsweise zu einem Zeitpunkt t6 unternommen werden, wenn der Bediener einen neuen Schaltbefehl gibt oder eine vorbestimmte Zeitdauer ΔT3 abgelaufen ist.

Die erste Zeitdauer ΔT1 kann zwischen 5 ms und 80 ms, vorzugsweise zwischen 10 ms und 40 ms liegen, um ein wiederholtes Auslösen der Überlastkupplung zu reduzieren. Die zweite Zeitdauer ΔT2 ist vorzugsweise größer als die erste Zeitdauer ΔT1 und kann zwischen 40 ms und 500 ms, vorzugsweise zwischen 60 ms und 200 ms liegen, um ausreichend lang auf eine Behebung der Störung zu warten, jedoch gleichzeitig eine Belastung der Schaltung gering zu halten.

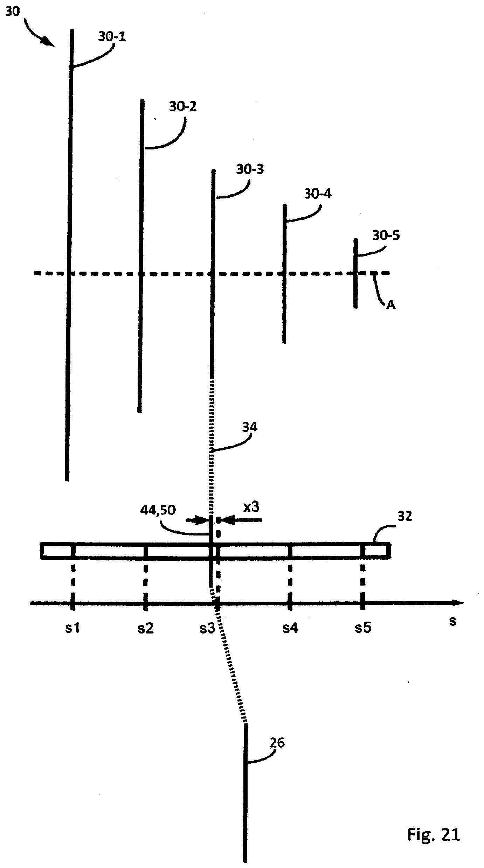

Nachfolgend wird unter Bezugnahme auf die Figuren 21 bis 23 eine Trimmeinrichtung sowie ein Trimmvorgang gemäß einem weiteren Aspekt der Erfindung näher erläutert.

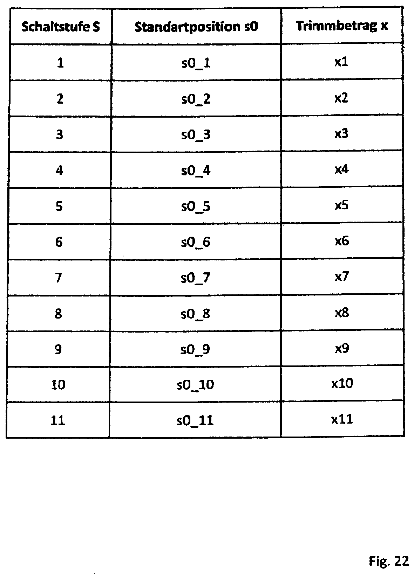

Figur 21 zeigt schematisch den Lauf der Kette 34 zwischen dem vorderen Kettenblatt 26, dem Schaltwerk 32 und dem hinteren Ritzelpaket 30. Aus Gründen der Übersichtlichkeit sind dabei nur fünf Ritzel 30-1 bis 30-5 gezeigt. Das bewegliche Element 44 des Schaltwerks 32, insbesondere die Kettenführungsräder 50, bewegen die Kette in eine Position s, so dass die Kette im Idealfall mit einem vorbestimmten Ritzel des Ritzelpakets ausgerichtet ist oder sich jedenfalls in einer für einen gleichmäßigen Kettenlauf idealen Position in Bezug auf das Ritzel befindet. In den unterschiedlichen Schaltstufen bewegt das Schaltwerk 32 die Kette 34 über jeweilige Ritzel 30-1, 30-2, ... und bewegt hierzu das bewegliche Element 44 in jeweilige Schaltpositionen s1, s2, ... Jeder Schaltstufe ist somit eine Schaltposition s1, s2, ... zugeordnet. Diese Zuordnung kann in Form von Schaltpositionsparametern in einer Schalttabelle (Figur 22) hinterlegt sein, wobei die Schaltpositionsparameter die Schaltpositionen selbst sein können oder die Schaltpositionen angebende Parameter sein können.

Die Schalttabelle kann in dem Speicher 168 der elektronischen Steuereinrichtung 160 gespeichert sein. Die elektronische Steuereinrichtung 160 ermittelt dann zum Einstellen einer gewünschten Schaltstufe Sn aus der Schalttabelle einen zugehörigen Wert sn und steuert den Motor 74 derart, dass das bewegliche Element 44 die Schaltposition sn erreicht. Wie in Figur 22 zu sehen ist, ist in der Schalttabelle des vorliegenden Ausführungsbeispiels die Schaltposition sn nicht unmittelbar hinterlegt. Stattdessen ist in der Schalttabelle für jede Schaltstufe eine Standartposition (Standartpositionsparameter) s0_1, s0_2, ... sowie ein Trimmbetrag (Trimmparameter) x1, x2, ... hinterlegt. Die Schaltposition sn ergibt sich dann aus der Summe aus Standartposition s0 und Trimmbetrag x. Beispielsweise ergibt sich die Schaltposition s1 der Schaltstufe 1 aus der Summe s0_1 + x1 usw. Dies erlaubt ein einfaches Zurücksetzen der Schaltposition auf eine Grundeinstellung oder Werkseinstellung.

Gemäß einem Aspekt der Erfindung lassen sich die Einträge der Schalttabelle derart ändern, dass zwei Schaltpositionsparameter unterschiedlicher Schaltstufen um unterschiedliche Beträge verändert werden. In einer Schalttabelle gemäß dem Vorbild der Figur 22 könnten beispielsweise die Trimmbeträge x1, x2, ... jeweils durch neue Werte überschreibbar sein, so dass mindestens zwei, vorzugsweise alle Trimmbeträge unabhängig voneinander veränderbar sind. Die Änderungen in den Einträgen der Schalttabelle können dabei vorzugsweise durch drahtlos empfangene Steuerungsbefehle vollzogen werden, insbesondere durch Steuerungsbefehle, die von dem Funkmodul 170 empfangen und an die CPU 166 und den Speicher 168 weitergegeben werden. Hierfür kann ein drahtloses Eingabegerät, insbesondere ein mobiles Endgerät verwendet werden. Besonders bevorzugt ist der Einsatz eines Smartphones, Tablets oder ähnlichen mobilen Endgeräts, auf welchem ein vorbestimmter Programmcode (App) installiert ist, welcher dem Nutzer die Möglichkeit verschafft, unmittelbar Einfluss auf die Schalttabelle zu nehmen.

Insbesondere kann ein solcher Programmcode den Nutzer zur Eingabe einer gewünschten Schaltstufe sowie zur Eingabe eines Trimmbetrags für diese Schaltstufe auffordern. Der Programmcode kann ferner dafür eingerichtet sein, an die elektronische Steuereinrichtung 160 eine Anweisung zur Einstellung einer bestimmten Schaltstufe zu geben. Darüber hinaus kann das Funkmodul 170 dafür eingerichtet sein, Daten über gespeicherte Einträge der Schalttabelle an das mobile Endgerät zu übertragen.

In einer komfortablen Variante kann der Programmcode einem Nutzer die Möglichkeit geben, den Trimmbetrag x für eine gewählte Schaltstufe schrittweise zu vergrößern oder zu verkleinern, wobei der Programmcode für jeden eingestellten Trimmbetrag eine Anweisung an die elektronische Steuereinrichtung 160 übersendet, das bewegliche Element in die entsprechende Schaltposition zu verstellen, die sich aus der Standartposition und dem Trimmbetrag ergibt. Dies ermöglicht dem Nutzer, die Schaltposition einer bestimmten Schaltstufe im laufenden Betrieb zu trimmen, das heißt gleichzeitig den gleichmäßigen Lauf der Kette und die exakte Ausrichtung zwischen Kettenführungsrad 50 und Ritzel 30-n zu prüfen. Der Nutzer kann dann jede der Schaltstufen einstellen, den Schaltvorgang bzw. den Kettenlauf und die Ausrichtung zwischen Kettenführungsrad 50 und Ritzel 30-n prüfen und ggf. individuell für jede Schaltstufe eine exakte Anpassung der Schaltposition vornehmen.

Die Prüfung des Kettenlaufs und der optimalen Schaltposition kann nach einem weiteren vorteilhaften Merkmal der Erfindung unterstützt werden durch eine Auswertung der Ausgabe des Beschleunigungssensors 172. Insbesondere kann der Beschleunigungssensor 172 eine Vibration erfassen und einen die Stärke bzw. Amplitude der Vibration repräsentierenden Wert an die CPU 166 übermitteln. Die CPU 166 kann den die Vibration repräsentierenden Wert in geeigneter Form dem Nutzer anzeigen, beispielsweise durch Übertragung des Werts über das Funkmodul 170 an eine Empfangseinheit, insbesondere ein mobiles Endgerät, an welchem der die Vibration repräsentierende Wert angezeigt wird, oder durch entsprechende Ansteuerung der LED 176, welche in einer einfachen Variante durch einen bestimmten Blinkcode oder dergleichen eine Aussage über die Stärke bzw. Amplitude der Vibration ausgeben könnte. Vorteilhaft kann der Nutzer dann ein Verfahren zum Trimmen der Stelleinrichtung einsetzen, bei welchem er eine bestimmte Schaltstufe S1 einstellt und anschließend verschiedene Trimmbeträge x einstellt, so dass das bewegliche Element 44 in Schaltpositionen gefahren wird, die sich in der Umgebung der zuvor eingegebenen Schaltposition, insbesondere der Standartschaltposition S0 befinden. Für jede eingestellte Schaltposition kann der Nutzer die Größe der Vibration erfassen, woraufhin er schließlich denjenigen Trimmbetrag bzw. diejenige Schaltposition auswählen kann, bei welchen die Vibrationen am geringsten waren. Eine solche Einstellung entspricht dann mit guter Näherung einer optimalen Schaltposition. Den Vorgang kann der Nutzer schließlich für jede Schaltstufe wiederholen, für welche er eine Anpassung der Schaltposition wünscht.

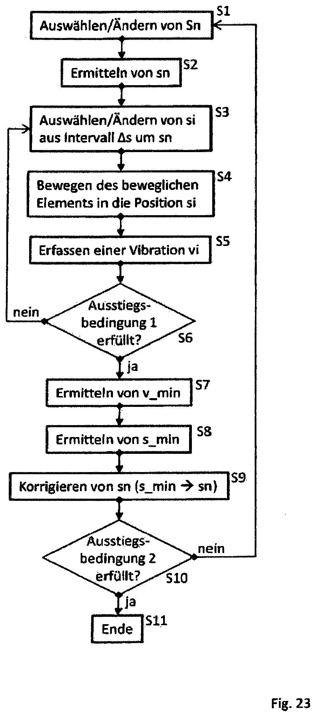

In einer besonders vorteilhaften Weiterbildung des vorstehend erläuterten Trimmverfahrens unter Verwendung des Beschleunigungssensors 172 kann ein Trimmvorgang für eine oder mehrere Schaltstufen halbautomatisch oder vollautomatisch unter Verwendung eines in Figur 23 illustrierten Trimmprogramms ausgeführt werden. Dass Trimmprogramm kann dabei entweder unmittelbar auf der CPU 166 laufen oder alternativ auf einem mit der elektronischen Steuereinrichtung 160 verbundenen Steuerungsgerät. Insbesondere kann das Trimmprogramm auf einem mobilen Endgerät, wie einem Smartphone, installiert sein und kann die einzelnen Steuerungsanweisungen drahtlos über das Funkmodul 170 and die CPU 166 übertragen.

In einem ersten Schritt S1 des Trimmprogramms wird eine Schaltstufe Sn ausgewählt oder eine bereits eingestellt Schaltstufe wird geändert. Im anschließenden Schritt S2 wird auf Grundlage der Schalttabelle (Figur 22) die der Schaltstufe Sn zugeordnete Schaltposition sn ermittelt (beispielsweise durch Addition der Standartschaltposition s0_n mit dem Trimmbetrag xn).

Im nachfolgenden Schritt S3 wird aus einem Intervall Δs, welches die Schaltposition sn umschließt (sn liegt im Intervall Δs), ein Wert si ausgewählt. Das Intervall Δs ist dabei vorzugsweise kleiner oder gleich einem mittleren Abstand zwischen den Schaltposition zweier benachbarter Schaltstufen. In Schritt S4 wird anschließend das bewegliche Element in die Position si bewegt, woraufhin im Schritt S5 über den Positionssensors 130 eine Erfassung der Vibration vi des Schaltwerks 32 erfolgt.

Die Schritte S3 bis S5 werden vorzugsweise so lange wiederholt, bis eine vorbestimmte Ausstiegsbestimmung 1 erfüllt ist. Bei jeder Wiederholung wird ein anderer Wert si aus dem Intervall Δs ausgewählt, das bewegliche Element wird an die neue Position si gefahren und die Vibration vi wird gemessen. Dieser Zyklus wird so lange wiederholt, bis die Ausstiegsbedingung 1 erfüllt ist. Als Ausstiegsbedingung 1 kann vorgesehen sein, dass eine vorbestimmte Anzahl an verschiedenen Positionen si angefahren und getestet wurden. So können beispielsweise die Positionen si in gleichmäßigen Abständen von einem kleinsten Wert des Intervalls Δs zu einem größten Wert des Intervalls Δs gewählt werden und die Ausstiegsbedingung 1 ist dann erfüllt, wenn alle Positionen si angefahren wurden. Alternativ kann die Überschreitung einer vorbestimmten Zeitdauer oder eine Nutzereingabe als Ausstiegsbedingung 1 gewählt werden.

Im anschließenden Schritt S7, wenn die Ausstiegsbedingung 1 erfüllt ist, werden die für die jeweiligen Position si gemessenen Vibrationen vi miteinander verglichen und ein Minimalwert v_min wird ermittelt. Die Position si, bei welcher der Minimalwert v_min angenommen wird, wird im Schritt S8 als Position mit geringster Vibration s_min ermittelt. Unter der Annahme, dass an dieser Position die beste Schaltposition erreicht ist, wird im Schritt S9 dann der entsprechende Schaltpositionsparameter in der Schalttabelle aktualisiert, so dass sich aus der Schalttabelle nun für diese Schaltstufe Sn der Wert x_min als neue Schaltposition sn ergibt (zum Beispiel wird der Trimmbetrag xn auf x_min-s0_n gesetzt). Die Schalttabelle wird also für diese Schaltstufe Sn aktualisiert und neu beschrieben.

Die Schritte S1 bis S9 können wiederholt für mehrere Schaltstufen Sn ausgeführt werden, bis eine Ausstiegsbedingung 2 erfüllt ist. Insbesondere kann Ausstiegsbedingung 2 fordern, dass alle Schaltstufen des Schaltwerks 32 zumindest einmal ausgewählt wurden (Schritt S1) und somit für alle Schaltstufen durch die Schritte S2 bis S9 ein optimaler Schaltpositionsparameter ermittelt wurde. Alternativ kann die Ausstiegsbedingung 2 den Ablauf einer vorbestimmten Zeitdauer abfragen oder eine Nutzereingabe abfragen. Ist die Ausstiegsbedingung 2 erfüllt, so endet das Trimmprogramm (Schritt S11).

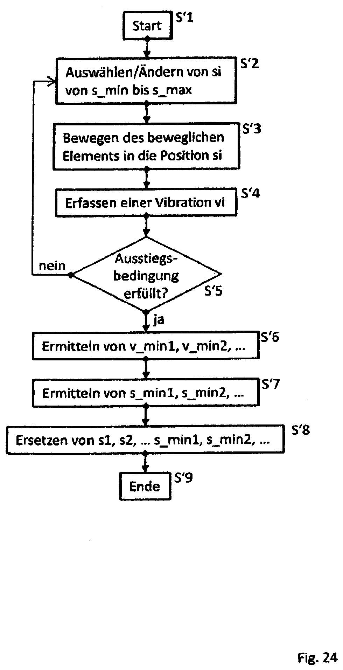

Figur 24 zeigt eine Variante des vorstehend beschriebenen Trimmprogramms gemäß der Erfindung. In einem Schritt S'1 wird das Trimmprogramm gestartet, beispielsweise durch User-Eingabe über den Funktionsschalter 174 oder durch einen Startbefehl, der am mobilen Endgerät eingegeben und vom Funkmodul 170 der elektronischen Steuereinrichtung 160 empfangen wurde. Ausgewählt wird dann im Schritt S'2 eine Position si innerhalb des maximalen Bewegungsbereichs des beweglichen Elements 44 von s_min bis s_max. Der elektromechanische Antrieb 58 bewegt dann das bewegliche Element 44 in Schritt S'3 in die Position si, woraufhin im Schritt S'4 eine Vibration vi an dieser Position si erfasst wird. Die Schritte S'2 bis S'4 werden so lange im Zyklus ausgeführt, bis eine Ausstiegsbedingung des Schritts S'5 erfüllt ist. Insbesondere wird hier daran gedacht, dass das bewegliche Element den gesamten Bewegungsbereich von s_min bis s_max einmal vollständig durchläuft und vorzugsweise auch in umgekehrter Richtung den Bewegungsbereich erneut durchläuft, gegebenenfalls den Bewegungsbereich sogar mehr als zweimal vollständig durchläuft, d.h. alle möglichen Positionen s des beweglichen Elements mindestens einmal einstellt. Dementsprechend fragt die Ausstiegsbedingung des Schritts S'5 ab, ob der gesamte Bewegungsbereich des beweglichen Elements in der gewünschten Anzahl vollständig durchlaufen wurde.

Werden insbesondere bei Mehrfachdurchläufen bestimmte Positionen si mehrfach angefahren, so können vorteilhaft die jeweils an dieser Position si gemessenen Vibrationen vi gemittelt werden, um zu jeder Position si eine mittlere Vibration vim zu ermitteln, so dass die Genauigkeit der Vibrationsmessung verbessert wird.

Ist die Ausstiegsbedingung erfüllt (S'5 JA), so sucht das Programm im Schritt S'6 in der Datenreihe der gemessenen Werte der Vibration vi bzw. vim nach Minimalwerten v_min1, v_min2, ... und ermittelt in Schritt S'7 die diesen Minimalwerten zugeordneten Positionen s_min1, s_min2, ... Auf diese Weise sollte für jede Schaltstufe genau eine Position s_min gefunden werden, für welche die Vibration ein Minimum annimmt und die somit eine bestmögliche Schaltposition repräsentiert. Dementsprechend wird in Schritt S'8 eine Schalttabelle derart aktualisiert, dass die gespeicherten Schaltpositionen s1, s2, ... durch die neu gefundenen besten Schaltpositionen s_min1, s_min2, ... ersetzt werden.

Sind in der Schalttabelle anstelle der Schaltpositionen s1, s2, ... jeweils Standartpositionen s0_1, s0_2, ... sowie zugehörige Trimmbeträge x1, x2, ... gespeichert (nach dem Vorbild der Figur 22), so kann anstelle des Schritts S'8 alternativ ein Abgleich der in der Schalttabelle gespeicherten Standartpositionen s0_1, s0_2, ... mit den gefundenen Schaltpositionen s_min1, s_min2, ... erfolgen und die Trimmbeträge der Schalttabelle können auf die Werte x1 = s_min1-s0_1, x2 = s_min2-s0_2, ... gesetzt werden.

Im nachfolgenden Schritt S'9 endet das Trimmprogramm schließlich.

Die vorstehend genannten Varianten der Trimmeinrichtung bzw. des Trimmverfahrens und des Trimmprogramms erlauben eine individuelle Einstellung einzelner Trimmbeträge bzw. einzelner Schaltpositionen der jeweiligen Schaltstufen. Als vorteilhaft werden jedoch auch Varianten der Erfindung angesehen, in welchen ein einziger Trimmvorgang die Trimmbeträge aller Schaltstufen oder im Wesentlichen aller Schaltstufen gleichzeitig betrifft, wenngleich in unterschiedlichem Maße. Auf diese Weise wird eine besonders einfache Trimmfunktion erreicht, um Fehlstellungen zwischen Schaltwerk 32 und Ritzelpaket 30 auszugleichen, die von Ritzel zu Ritzel stetig zunehmen oder abnehmen. Als Beispiel hierfür ist eine Verstellung der Position des beweglichen Elements 44 aufgrund einer axialen Kraft durch die Kette 34 zu nennen. Bei Verwendung einer kürzeren Kette steigt diese Zugkraft an, wobei das Ausmaß der damit einhergehenden Fehlstellung zwischen Schaltwerk 32 und Ritzelpaket 30 dann mit zunehmendem Versatz zwischen Ritzel und vorderem Kettenblatt 24, d.h. mit zunehmender Schrägstellung der Kette 34, ebenfalls anwächst. Die elektronische Steuereinrichtung 160 kann dann dafür eingerichtet sein, die Trimmbeträge x1, x2, ... gleichzeitig in vorbestimmter Weise zu verändern, um die oben beschriebenen Effekte einer Kettenschrägstellung auszugleichen.

Ist beispielsweise Sn eine neutrale Schaltstufe, bei welcher die Kettenschrägstellung und damit die auf das Schaltwerk 32 wirkende axiale Kraft am geringsten ist, so kann die Stelleinrichtung vorteilhaft dafür eingerichtet sein, die Trimmbeträge mit zunehmendem Abstand der Schaltpositionen von der Schaltposition sn jeweils anwachsen zu lassen. Für eine bestimmte Kettenlänge oder eine bestimmte tatsächliche Konfiguration des Fahrrads können vorbestimmte Sätze von Trimmbeträgen x1, x2, ... im Speicher 168 hinterlegt sein oder von einem mobilen Endgerät auf die elektronische Steuereinrichtung 160 geladen werden.

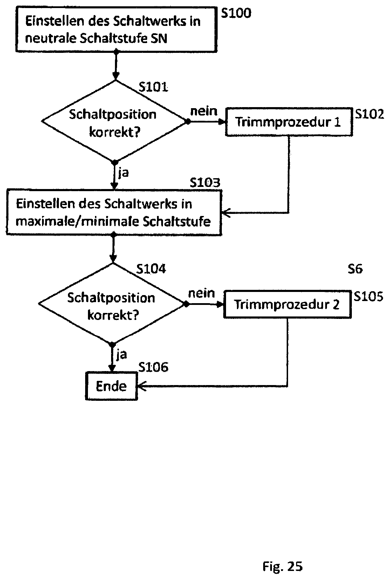

Ein Trimmvorgang mit derartigen vordefinierten Sets von Trimmbeträgen kann in der in Figur 24 illustrierten Schrittfolge ablaufen. Das in Figur 25 illustrierte Trimmverfahren kann beispielsweise nach der Erstmontage eines Schaltwerks an einem Fahrrad, im Rahmen von Wartungsarbeiten oder nach einem Austausch von Komponenten des Fahrrads vorgenommen werden.

In einem ersten Schritt S100 wird das Schaltwerk in eine neutrale Schaltstufe SN eingestellt. Eine neutrale Schaltstufe SN ist eine bestimmte Schaltstufe, zumeist eine mittlere Schaltstufe, bei welcher im Wesentlichen keine Kettenschräglage auftritt, d.h. ein Ritzel, welches in etwa auf gleicher axialer Höhe angeordnet ist wie das Kettenblatt. In dieser neutralen Schaltstufe SN wird im Schritt S101 geprüft, ob die vom Schaltwerk eingestellte Schaltposition korrekt ist, d.h. ob das Kettenführungsrad relativ zum entsprechenden Ritzel auf der richtigen axialen Höhe eingestellt ist. Hierzu kann der Gleichlauf der Kette geprüft werden oder eine Vibration des Schaltwerks erfasst werden, wie vorstehend beschrieben. Besteht Korrekturbedarf (Schritt S101 NEIN), so wird eine Trimmprozedur 1 (Schritt S102) ausgeführt, welche im Wesentlichen einem an sich bekannten Trimmvorgang entsprechen kann, beispielsweise einem Trimmvorgang, in welchem alle Schaltpositionen im Wesentlichen um den gleichen Betrag verändert werden. Die Trimmprozedur 1 wird abgeschlossen, wenn die korrekte Schaltposition für die neutrale Schaltstufe SN erreicht ist.

Anschließend wird in einem Schritt S103 das Schaltwerk in eine extreme Schaltstufe, beispielsweise die höchste Schaltstufe oder die niedrigste Schaltstufe eingestellt (Schritt S103). Anschließend wird im Schritt S104 erneut geprüft, ob die Schaltposition des beweglichen Elements korrekt ist, d.h. ob sich das Kettenführungsrad in der korrekten Position relativ zum Ritzel befindet. Ist dies nicht der Fall (Schritt S104 NEIN), so wird eine Trimmprozedur 2 eingeleitet, welche mit verschiedenen Trimmbeträgen für die unterschiedlichen Schaltpositionen arbeitet. Insbesondere kann in der Trimmprozedur 2 ein Set von Trimmbeträgen ausgewählt werden, in welchen die Trimmbeträge gleichzeitig, jedoch um unterschiedliche Beträge verstellt werden. Vorzugsweise steht eine Reihe von vordefinierten Sets von Trimmbeträgen zur Verfügung, welche wahlweise eingestellt werden können. Der Einstellvorgang kann dabei von einem Nutzer manuell oder durch einen elektronischen Befehl zur Änderung der Schalttabelle vorgenommen werden. Wurde ein geeigneter Trimmbetrag gefunden, der eine korrekte Positionierung in der gewählten Schaltstufe sicherstellt, so endet das Trimmverfahren schließlich im Schritt S106. Gewünschtenfalls kann das Verfahren S100 bis S106 für verschiedene Schaltstufen, insbesondere verschiedene extreme Schaltstufen wiederholt werden, um die geeigneten Trimmbeträge zu finden.

## Patentansprüche

1. Stelleinrichtung (32) für ein Fahrradkettenschaltwerk, umfassend:
- ein feststehendes Element (42), welches in Bezug auf einen Fahrradrahmen ortsfest anordenbar ist,
- ein bewegliches Element (44), welches in Bezug auf das feststehende Element (42) beweglich ist,
- einen elektromechanischen Antrieb (58), welcher Antriebskraft für eine Bewegung des beweglichen Elements (44) bereitstellt, wobei der elektromechanische Antrieb (58) einen Motor (74) und ein durch den Motor (74) angetriebenes Getriebe (80) aufweist,
- wobei das Getriebe (80) ein erstes Getrieberad (96) und ein mit dem ersten Getrieberad (96) in Eingriff stehendes zweites Getrieberad (126) umfasst,
**dadurch gekennzeichnet, dass** das zweite Getrieberad (126) zwei Teilräder (132, 134) mit jeweils gleicher Zahnzahl umfasst, welche beide gleichzeitig im Eingriff mit dem ersten Getrieberad (96) sind, wobei die Teilräder (132, 134) um die gleiche Drehachse drehbar sind und durch eine Kraft in Drehrichtung um die Drehachse relativ zueinander vorgespannt sind.

2. Stelleinrichtung nach Anspruch 1, **dadurch gekennzeichnet, dass** die Kraft durch eine Krafterzeugungseinrichtung (136) erzeugt wird, welche funktionell zwischen den beiden Teilrädern (132, 134) angeordnet ist, so dass sie sich einerseits an einem ersten Teilrad (132) der beiden Teilräder abstützt und sich andererseits an einem zweiten Teilrad (134) der beiden Teilräder abstützt.

3. Stelleinrichtung nach Anspruch 1 oder Anspruch 2, **dadurch gekennzeichnet, dass** ein erstes Teilrad (132) der beiden Teilräder (132, 134) relativ zur Drehachse mit einem vorbestimmten ersten radialen Spiel gelagert ist und ein zweites Teilrad (134) der beiden Teilräder (132, 134) relativ zur Drehachse mit einem vorbestimmten zweiten radialen Spiel, welches kleiner ist als das erste radiale Spiel, oder ohne radiales Spiel gelagert ist.

4. Stelleinrichtung nach einem der vorhergehenden Ansprüche, **gekennzeichnet durch** eine Positionserfassungeinrichtung (124) zur Erfassung einer aktuellen Drehposition des ersten Getrieberads (96) des Getriebes (80), wobei
a. das zweite Getrieberad ein Sensorelement eines Rotationspositionssensors trägt oder
b. die Positionserfassungseinrichtung (124) ein fünftes Getrieberad (128) umfasst, welches mit dem zweiten Getrieberad (126), insbesondere mit beiden Teilrädern (132, 134) des zweiten Getrieberads (126), im Eingriff ist und welches ein Sensorelement eines Rotationspositionssensors (130) trägt.

5. Stelleinrichtung für ein Fahrrad nach einem der vorhergehenden Ansprüche,
- wobei das Getriebe (80) wenigstens ein Stufenzahnrad (100, 106) mit wenigstens zwei koaxialen Zahnrädern (98, 102) unterschiedlicher Zahnzahl aufweist,
**dadurch gekennzeichnet, dass** die beiden Zahnräder (98, 102) des Stufenzahnrads (100) jeweils eine zentrale Öffnung (154) aufweisen, in welche eine Getriebewelle (152) eingesetzt ist.

6. Stelleinrichtung nach Anspruch 5, **dadurch gekennzeichnet, dass** das Material der Getriebewelle (152) eine geringere Härte aufweist, als das Material wenigstens eines der beiden Zahnräder (98, 102).

7. Stelleinrichtung nach Anspruch 5 oder Anspruch 6, **dadurch gekennzeichnet, dass** wenigstens eines der beiden Zahnräder (98, 102) drehbar an der Getriebewelle (152) gehalten ist.

8. Stelleinrichtung nach einem der Ansprüche 5 bis 7, **dadurch gekennzeichnet, dass** die beiden Zahnräder (98, 102) zueinander drehfest gehalten oder integral miteinander ausgebildet sind.

9. Stelleinrichtung nach einem der vorhergehenden Ansprüche
- wobei der elektromechanische Antrieb (58) ein Gehäuse (60) umfasst und der Motor (74) in dem Gehäuse (60) befestigt ist,
**gekennzeichnet durch** einen Motorträger (84), wobei der Motorträger (84) erste Befestigungsmittel zur Befestigung des Motorträgers (84) am Gehäuse (60) und von den ersten Befestigungsmitteln (86, 88) separate zweite Befestigungsmittel (92) zur Befestigung des Motors (74) an dem Motorträger (84) aufweist.

10. Stelleinrichtung nach Anspruch 9, **dadurch gekennzeichnet, dass** der Motorträger (84) zumindest teilweise in das Material des Gehäuses (60) eingebettet ist, insbesondere eingeformt ist.

11. Stelleinrichtung nach Anspruch 9 oder Anspruch 10, **dadurch gekennzeichnet, dass** der Motorträger (84) formschlüssig und spielfrei in einer passenden Aussparung des Gehäuses (60) gehalten ist.

12. Stelleinrichtung nach mindestens einem der Ansprüche 9 bis 11, **dadurch gekennzeichnet, dass** der Motorträger (84) durch eine Schraubverbindungen oder eine Klebeverbindung am Gehäuse (60) befestigt ist.

13. Stelleinrichtung nach mindestens einem der Ansprüche 9 bis 12, **dadurch gekennzeichnet, dass** das Gehäuse (60) aus einem Kunststoffmaterial gebildet ist und der Motorträger (84) vorzugsweise aus Metall gebildet ist.

14. Verfahren zur Steuerung einer Stelleinrichtung für ein Fahrradkettenschaltwerk nach einem der vorhergehenden Ansprüche, wobei
- der elektromechanischen Antrieb (58), welcher auf Basis eines Antriebssteuersignals Antriebskraft für eine Bewegung des beweglichen Elements (44) bereitstellt,
- eine Störungserfassungseinrichtung, welche eine Störung betreffend die Bewegung des beweglichen Elements (44) erfasst,
**gekennzeichnet durch** die Schritte:
Erzeugen eines ersten Antriebssteuersignals, um den elektromechanischen Antrieb (58) mit einer ersten Antriebsleistung anzutreiben, wenn die Störungserfassungseinrichtung keine Störung erfasst, und
Erzeugen eines zweiten Antriebssteuersignals, um den elektromechanischen Antrieb (58) mit einer zweiten Antriebsleistung anzutreiben, wenn die Störungserfassungseinrichtung eine Störung erfasst,
wobei die zweite Antriebsleistung kleiner als die erste Antriebsleistung, jedoch größer als Null ist.

15. Verfahren nach Anspruch 14, **dadurch gekennzeichnet, dass** das zweite Antriebssignal erzeugt wird, wenn der Störung eine vorbestimmte erste Zeit andauert.

16. Verfahren nach Anspruch 14 oder Anspruch 15, **dadurch gekennzeichnet, dass** der elektromechanische Antrieb (58) gestoppt wird, wenn die Störung eine vorbestimmte zweite Zeit andauert, nachdem das zweite Antriebssignal erzeugt wurde.

17. Verfahren nach einem der Ansprüche 14 bis 16, **dadurch gekennzeichnet, dass** die Stelleinrichtung ferner eine Überlastkupplung (118) aufweist, welche funktionsmäßig zwischen einer Antriebsquelle des elektromechanischen Antriebs (58) und einem Ausgangsglied des elektromechanischen Antriebs (58) angeordnet ist und welche eine Übertragung von Antriebskraft von der Antriebsquelle zu dem Ausgangsglied unterbricht, wenn eine an der Überlastkupplung (118) wirkende Kraft einen vorbestimmten Überlastschwellwert überschreitet.

18. Verfahren nach Anspruch 17, **dadurch gekennzeichnet,**
**dass** die erste Antriebsleistung derart bemessen ist, dass im Falle einer Blockierung der Bewegung des Ausgangsglieds die an der Überlastkupplung (118) wirkende Kraft größer ist als der Überlastschwellwert und
**dass** die zweite Antriebsleistung derart bemessen ist, dass im Falle einer Blockierung der Bewegung des Ausgangsglieds die an der Überlastkupplung (118) wirkende Kraft kleiner ist als der Überlastschwellwert.

19. Stelleinrichtung für ein Fahrradkettenschaltwerk nach einem der Ansprüche 1 bis 13, oder/und eingerichtet für ein Verfahren nach einem der Ansprüche 14 bis 18, wobei die Stelleinrichtung umfasst:
- eine elektronische Steuereinrichtung (160), in welcher für eine Mehrzahl von Schaltstufen jeweils für jede Schaltstufe mindestens ein Schaltpositionsparameter gespeichert ist, der einer Schaltposition des beweglichen Elements (44) in der jeweiligen Schaltstufe entspricht, wobei die Steuereinrichtung (160) dafür eingerichtet ist, in Reaktion auf ein Schaltstufenauswahlsignal, das eine einzustellenden Schaltstufe repräsentiert, den elektromechanischen Antrieb (58) auf Basis des Schaltpositionsparameters der einzustellenden Schaltstufe derart anzusteuern, dass das bewegliche Element (44) die Schaltposition erreicht,
**gekennzeichnet durch** eine Trimmeinrichtung, mittels welcher mindestens einer der Schaltpositionsparameter unabhängig von allen anderen der Schaltpositionsparameter auf Veranlassung eines Nutzers änderbar ist.

20. Stelleinrichtung nach Anspruch 19, **dadurch gekennzeichnet, dass** in der Steuereinrichtung (160) für jede Schaltstufe der Mehrzahl von Schaltstufen jeweils ein Standartpositionsparameter gespeichert ist, welcher einer vorbestimmten Standart-Schaltposition des beweglichen Elements (44) entspricht, wobei der Schaltpositionsparameter vorzugsweise eine Abweichung von dem Standartpositionsparameter repräsentiert.

21. Stelleinrichtung nach Anspruch 19 oder Anspruch 20, **gekennzeichnet durch** einen Beschleunigungssensor (172), welcher eine Information über eine Vibration der Stelleinrichtung bereitstellt.

22. Stelleinrichtung nach einem der Ansprüche 19 bis 21, ferner umfassend einen auf einem tragbaren Gerät ausführbaren Programmcode, wobei der Programmcode dafür eingerichtet ist, das tragbare Gerät zur Ausführung der folgenden Schritte anzusteuern:
a. Empfangen einer Nutzereingabe zur Auswahl einer Schaltstufe der Mehrzahl von Schaltstufen,
b. Empfangen einer Nutzereingabe zur Einstellung oder/und Änderung des Schaltpositionsparameters.

23. Verfahren nach einem der Ansprüche 14 bis 18 oder zur Einstellung einer Stelleinrichtung nach einem der Ansprüche 1 bis 13 oder 19 bis 22,
wobei das Verfahren die folgenden Schritte umfasst:
- Auswählen einer Schaltstufe,
- Abrufen eines gespeicherten Schaltpositionsparameters, der einer Schaltposition eines beweglichen Elements (44) der Stelleinrichtung in der jeweiligen Schaltstufe zugeordnet ist, aus einem Speicher (168),
- Ändern des Schaltpositionsparameters,
- Speichern des geänderten Schaltpositionsparameters in dem Speicher (168).

24. Verfahren nach Anspruch 23, ferner **gekennzeichnet durch** die Schritte:
a. Einstellen einer ausgewählten Schaltstufe **durch** die Stelleinrichtung,
b. Erfassen eines Funktionsparameters der Stelleinrichtung, welcher eine Genauigkeit der Schaltstufeneinstellung repräsentiert,
c. Verstellen des Schaltpositionsparameters derart, dass sich der Funktionsparameter im Sinne einer Verbesserung der Genauigkeit der Schaltstufeneinstellung ändert,
d. Abspeichern des in Schritt c eingestellten Schaltpositionsparameters.

25. Verfahren nach Anspruch 24, **dadurch gekennzeichnet, dass** der Funktionsparameter eine Schwingung der Stelleinrichtung repräsentiert und dass der Schaltpositionsparameter im Sinne einer Reduzierung der Schwingung verstellt wird.

26. Verfahren nach Anspruch 25, **dadurch gekennzeichnet, dass** eine Steuereinrichtung (160) in einem automatischen Einstellprozess selbsttätig die folgenden Schritte ausführt:
a. Einstellen der Stelleinrichtung in eine erste Schaltstufe einer Mehrzahl von Schaltstufen,
b. Einstellen der Position des beweglichen Elements auf eine Mehrzahl von Positionen innerhalb eines vorbestimmten Intervalls um die Schaltposition der eingestellten Schaltstufe und Erfassung einer Schwingung der Stelleinrichtung für jede eingestellte Position,
c. Einstellen des Schaltpositionsparameters auf einen Wert, der der Position des beweglichen Elements entspricht, an welcher die geringste Schwingung erfasst wurde,
d. Einstellen der Stelleinrichtung in eine weitere Schaltstufe der Mehrzahl von Schaltstufen,
e. Wiederholen der Schritte b bis d, bis alle Schaltstufen der Mehrzahl von Schaltstufen wenigstens einmal eingestellt wurden.

## Claims

1. Actuating device (32) for a bicycle derailleur system, comprising:
- a fixed element (42) which is able to be arranged in relation to a bicycle frame;
- a movable element (44) which is movable in relation to the fixed element (42);
- an electromechanical drive (58) which provides drive force for a movement of the movable element (44), wherein the electromechanical drive (58) has a motor (74) and a gearing (80) which is driven by the motor (74),
- wherein the gearing (80) comprises a first gearing wheel (96) and a second gearing wheel (126) which is in engagement with the first gearing wheel (96),
**characterized in that** the second gearing wheel (126) comprises two partial wheels (132, 134) with in each case the same number of teeth, which partial wheels are both simultaneously in engagement with the first gearing wheel (96), wherein the partial wheels (132, 134) are rotatable about the same axis of rotation and are preloaded relative to one another by a force in a direction of rotation about the axis of rotation.

2. Actuating device according to Claim 1, **characterized in that** the force is generated by a force-generating device (136) which is arranged functionally between the two partial wheels (132, 134) so as to be supported at one side on a first partial wheel (132) of the two partial wheels and supported at the other side on a second partial wheel (134) of the two partial wheels.

3. Actuating device according to Claim 1 or Claim 2, **characterized in that** a first partial wheel (132) of the two partial wheels (132, 134) is mounted with a predetermined first radial play relative to the axis of rotation and a second partial wheel (134) of the two partial wheels (132, 134) is mounted with a predetermined second radial play, which is smaller than the first radial play, or without radial play, relative to the axis of rotation.

4. Actuating device according to one of the preceding claims, **characterized by** a position detection device (124) for detecting a present rotational position of the first gearing wheel (96) of the gearing (80),
wherein
a. the second gearing wheel bears a sensor element of a rotational position sensor, or
b. the position detection device (124) comprises a fifth gearing wheel (128) which is in engagement with the second gearing wheel (126), in particular with both partial wheels (132, 134) of the second gearing wheel (126), and which bears a sensor element of a rotational position sensor (130).

5. Actuating device for a bicycle according to one of the preceding claims,
- wherein the gearing (80) has at least one stepped tooth wheel (100, 106) with at least two coaxial toothed wheels (98, 102) with different numbers of teeth,
**characterized in that** the two toothed wheels (98, 102) of the stepped tooth wheel (100) each have a central opening (154) into which a gearing shaft (152) is inserted.

6. Actuating device according to Claim 5, **characterized in that** the material of the gearing shaft (152) has a lower hardness than the material of at least one of the two toothed wheels (98, 102).

7. Actuating device according to Claim 5 or Claim 6, **characterized in that** at least one of the two toothed wheels (98, 102) is held rotatably on the gearing shaft (152).

8. Actuating device according to one of Claims 5 to 7, **characterized in that** the two toothed wheels (98, 102) are held rotationally conjointly relative to one another or are formed integrally with one another.

9. Actuating device according to one of the preceding claims,
- wherein the electromechanical drive (58) comprises a housing (60) and the motor (74) is fastened in the housing (60),
**characterized by** a motor carrier (84), wherein the motor carrier (84) has first fastening means for fastening of the motor carrier (84) to the housing (60) and has second fastening means (92) which are separate from the first fastening means (86, 88) and which serve for fastening of the motor (74) to the motor carrier (84).

10. Actuating device according to Claim 9, **characterized in that** the motor carrier (84) is at least partially embedded into, in particular formed into, the material of the housing (60).

11. Actuating device according to Claim 9 or Claim 10, **characterized in that** the motor carrier (84) is held in a form-fitting manner and without play in a matching cutout of the housing (60).

12. Actuating device according to at least one of Claims 9 to 11, **characterized in that** the motor carrier (84) is fastened by way of a screw connection or an adhesive connection to the housing (60).

13. Actuating device according to at least one of Claims 9 to 12, **characterized in that** the housing (60) is formed from a plastics material and the motor carrier (84) is formed preferably from metal.

14. Method for controlling an actuating device for a bicycle derailleur system according to one of the preceding claims, wherein
- the electromechanical drive (58), which provides drive force for a movement of the movable element (44) on the basis of a drive control signal,
- a fault detection device which detects a fault relating to the movement of the movable element (44),
**characterized by** the steps of:
generating a first drive control signal, in order to drive the electromechanical drive (58) with a first level of drive power, if the fault detection device detects no fault, and
generating a second drive control signal, in order to drive the electromechanical drive (58) with a second level of drive power, if the fault detection device detects a fault,
wherein the second level of drive power is lower than the first level of drive power but is greater than zero.

15. Method according to Claim 14, **characterized in that** the second drive signal is generated if the fault persists for a predetermined first time.

16. Method according to Claim 14 or Claim 15, **characterized in that** the electromagnetic drive (58) is stopped if the fault persists for a predetermined second time after the second drive signal has been generated.

17. Method according to one of Claims 14 to 16, **characterized in that** the actuating device furthermore has an overload clutch (118) which is arranged functionally between a drive source of the electromechanical drive (58) and an output member of the electromechanical drive (58) and which interrupts a transmission of drive force from the drive source to the output member if a force acting on the overload clutch (118) exceeds a predetermined overload threshold value.

18. Method according to Claim 17, **characterized**
**in that** the first level of drive power is configured such that, in the event of a blockage of the movement of the output member, the force acting on the overload clutch (118) is greater than the overload threshold value, and
**in that** the second level of drive power is configured such that, in the event of a blockage of the movement of the output member, the force acting on the overload clutch (118) is lower than the overload threshold value.

19. Actuating device for a bicycle derailleur system according to one of Claims 1 to 13, and/or configured for a method according to one of Claims 14 to 18, wherein the actuating device comprises:
- an electronic control device (160) in which, for a multiplicity of shift stages, in each case for each shift stage, there is stored at least one shift position parameter which corresponds to a shift position of the movable element (44) in the respective shift stage, wherein the control device (160) is configured to, in reaction to a shift stage selection signal which represents a shift stage to be set, activate the electromechanical drive (58) on the basis of the shift position parameter of the shift stage to be set in such a way that the movable element (44) reaches the shift position,
**characterized by** a trim device by means of which at least one of the shift position parameters is able to be changed independently of all the other shift position parameters at the instigation of a user.

20. Actuating device according to Claim 19, **characterized in that**, in the control device (160), for each shift stage of the multiplicity of shift stages, there is stored in each case one standard position parameter which corresponds to a predetermined standard shift position of the movable element (44), wherein the shift position parameter preferably represents a deviation from the standard position parameter.

21. Actuating device according to Claim 19 or Claim 20, **characterized by** an acceleration sensor (172) which provides an item of information concerning a vibration of the actuating device.

22. Actuating device according to one of Claims 19 to 21, furthermore comprising program code which can be executed on a portable appliance, wherein the program code is configured to activate the portable appliance to carry out the following steps:
a. receiving a user input regarding the selection of a shift stage of the multiplicity of shift stages,
b. receiving a user input regarding the setting and/or changing of the shift position parameter.

23. Method according to one of Claims 14 to 18 or for setting an actuating device according to one of Claims 1 to 13 or 19 to 22, wherein the method comprises the following steps:
- selecting a shift stage,
- retrieving a stored shift position parameter, which is assigned to a shift position of a movable element (44) of the actuating device in the respective shift stage, from a memory (168),
- changing the shift position parameter,
- storing the changed shift position parameter in the memory (168).

24. Method according to Claim 23, furthermore **characterized by** the steps of:
a. setting a selected shift stage by means of the actuating device,
b. detecting a functional parameter of the actuating device which represents an accuracy of the shift stage setting,
c. adjusting the shift position parameter in such a way that the functional parameter changes in the direction of an improvement of the accuracy of the shift stage setting,
d. storing the shift position parameter set in step c.

25. Method according to Claim 24, **characterized in that** the functional parameter represents a vibration of the actuating device, and **in that** the shift position parameter is adjusted in the direction of a reduction of the vibration.

26. Method according to Claim 25, **characterized in that** a control device (160) automatically performs the following steps in an automatic setting process:
a. setting the actuating device into a first shift stage of a multiplicity of shift stages,
b. setting the position of the movable element to a multiplicity of positions within a predetermined interval around the shift position of the set shift stage, and detecting a vibration of the actuating device for each set position,
c. setting the shift position parameter to a value which corresponds to the position of the movable element at which the smallest vibration has been detected,
d. setting the actuating device into a further shift stage of the multiplicity of shift stages,
e. repeating steps b to d until all the shift stages of the multiplicity of shift stages have been set at least once.

## Revendications

1. Dispositif de réglage (32) pour un dérailleur de chaîne de bicyclette, comprenant :
- un élément fixe (42), lequel peut être disposé de manière fixée à demeure par rapport à un cadre de bicyclette,
- un élément mobile (44), lequel est mobile par rapport à l'élément fixe (42),
- un entraînement électromécanique (58), lequel fournit une force d'entraînement pour un mouvement de l'élément mobile (44), l'entraînement électromécanique (58) présentant un moteur (74) et une transmission (80) entraînée par le moteur (74),
- la transmission (80) comprenant une première roue de transmission (96) et une deuxième roue de transmission (126) s'engrenant avec la première roue de transmission (96),
**caractérisé en ce que** la deuxième roue de transmission (126) comprend deux roues partielles (132, 134) dotées respectivement du même nombre de dents, lesquelles roues partielles s'engrènent toutes deux simultanément avec la première roue de transmission (96), les roues partielles (132, 134) étant rotatives autour du même axe de rotation et étant précontraintes l'une par rapport à l'autre par une force dans le sens de rotation autour de l'axe de rotation.

2. Dispositif de réglage selon la revendication 1, **caractérisé en ce que** la force est générée par un dispositif de génération de force (136), lequel est disposé fonctionnellement entre les deux roues partielles (132, 134), de telle sorte qu'il s'appuie d'un côté sur une première roue partielle (132) des deux roues partielles et s'appuie de l'autre côté sur une deuxième roue partielle (134) des deux roues partielles.

3. Dispositif de réglage selon la revendication 1 ou la revendication 2, **caractérisé en ce qu'**une première roue partielle (132) des deux roues partielles (132, 134) est montée avec un premier jeu radial prédéterminé par rapport à l'axe de rotation et une deuxième roue partielle (134) des deux roues partielles (132, 134) est montée avec un deuxième jeu radial prédéterminé par rapport à l'axe de rotation, lequel deuxième jeu radial est inférieur au premier jeu radial, ou est montée sans jeu radial.

4. Dispositif de réglage selon l'une des revendications précédentes, **caractérisé par** un dispositif de détection de position (124) servant à la détection d'une position de rotation actuelle de la première roue (96) de la transmission (80),
a. la deuxième roue de transmission supportant un élément d'un capteur de position de rotation ou
b. le dispositif de détection de position (124) comprenant une cinquième roue de transmission (128), laquelle s'engrène avec la deuxième roue de transmission (126), en particulier avec les deux roues partielles (132, 134) de la deuxième roue de transmission (126), et laquelle supporte un élément d'un capteur de position de rotation (130).

5. Dispositif de réglage pour une bicyclette selon l'une des revendications précédentes,
- la transmission (80) présentant au moins une roue dentée étagée (100, 106) dotée d'au moins deux roues dentées coaxiales (98, 102) de nombres de dents différents,
**caractérisé en ce que** les deux roues dentées (98, 102) de la roue dentée étagée (100) présentent respectivement une ouverture centrale (154) dans laquelle un arbre de transmission (152) est inséré.

6. Dispositif de réglage selon la revendication 5, **caractérisé en ce que** le matériau de l'arbre de transmission (152) présente une plus faible dureté que le matériau d'au moins l'une des deux roues dentées (98, 102) .

7. Dispositif de réglage selon la revendication 5 ou la revendication 6, **caractérisé en ce qu'**au moins l'une des deux roues dentées (98, 102) est retenue de manière rotative sur l'arbre de transmission (152).

8. Dispositif de réglage selon l'une des revendications 5 à 7, **caractérisé en ce que** les deux roues dentées (98, 102) sont retenues de manière solidaire en rotation l'une par rapport à l'autre ou sont réalisées d'un seul tenant l'une avec l'autre.

9. Dispositif de réglage selon l'une des revendications précédentes
- l'entraînement électromécanique (58) comprenant un carter (60) et le moteur (74) étant fixé dans le carter (60),
**caractérisé par** un support de moteur (84), le support de moteur (84) présentant des premiers moyens de fixation servant à la fixation du support de moteur (84) au carter (60) et des deuxièmes moyens de fixation (92) séparés des premiers moyens de fixation (86, 88) et servant à la fixation du moteur (74) au support de moteur (84).

10. Dispositif de réglage selon la revendication 9, **caractérisé en ce que** le support de moteur (84) est encastré, en particulier formé, au moins partiellement dans le matériau du carter (60).

11. Dispositif de réglage selon la revendication 9 ou la revendication 10, **caractérisé en ce que** le support de moteur (84) est retenu avec complémentarité de formes et sans jeu dans un évidement apparié du carter (60).

12. Dispositif de réglage selon au moins l'une des revendications 9 à 11, **caractérisé en ce que** le support de moteur (84) est fixé au carter (60) par le biais d'une liaison vissée ou d'une liaison adhésive.

13. Dispositif de réglage selon au moins l'une des revendications 9 à 12, **caractérisé en ce que** le boîtier (60) est formé à partir d'une matière plastique et le support de moteur (84) est formé de préférence à partir de métal.

14. Procédé de commande d'un dispositif de réglage pour un dérailleur de chaîne de bicyclette selon l'une des revendications précédentes, dans lequel
- l'entraînement électromécanique (58), lequel fournit, sur la base d'un signal de commande d'entraînement, une force d'entraînement pour un mouvement de l'élément mobile (44),
- un dispositif de détection de défaut, lequel détecte un défaut concernant le mouvement de l'élément mobile (44),
**caractérisé par** les étapes suivantes :
génération d'un premier signal de commande d'entraînement, afin d'entraîner l'entraînement électromécanique (58) avec une première puissance d'entraînement, lorsque le dispositif de détection de défaut ne détecte aucun défaut, et
génération d'un deuxième signal de commande d'entraînement, afin d'entraîner l'entraînement électromécanique (58) avec une deuxième puissance d'entraînement, lorsque le dispositif de détection de défaut détecte un défaut,
la deuxième puissance d'entraînement étant inférieure à la première puissance d'entraînement, mais supérieure à zéro.

15. Procédé selon la revendication 14, **caractérisé en ce que** le deuxième signal d'entraînement est généré lorsque le défaut dure une première durée prédéterminée.

16. Procédé selon la revendication 14 ou la revendication 15, **caractérisé en ce que** l'entraînement électromécanique (58) est arrêté lorsque le défaut dure une deuxième durée prédéterminée après que le deuxième signal d'entraînement a été généré.

17. Procédé selon l'une des revendications 14 à 16, **caractérisé en ce que** le dispositif de réglage présente en outre un accouplement de surcharge (118), lequel est disposé fonctionnellement entre une source d'entraînement de l'entraînement électromécanique (58) et un organe de sortie de l'entraînement électromécanique (58) et lequel interrompt un transfert de force d'entraînement de la source d'entraînement à l'organe de sortie lorsqu'une force agissant sur l'accouplement de surcharge (118) dépasse une valeur seuil de surcharge prédéterminée.

18. Procédé selon la revendication 17, **caractérisé**
**en ce que** la première puissance d'entraînement est calculée de telle sorte que, dans le cas d'un blocage du mouvement de l'organe de sortie, la force agissant sur l'accouplement de surcharge (118) est supérieure à la valeur seuil de surcharge et
**en ce que** la deuxième puissance d'entraînement est calculée de telle sorte que, dans le cas d'un blocage du mouvement de l'organe de sortie, la force agissant sur l'accouplement de surcharge (118) est inférieure à la valeur seuil de surcharge.

19. Dispositif de réglage pour un dérailleur de chaîne de bicyclette selon l'une des revendications 1 à 13, et/ou conçu pour un procédé selon l'une des revendications 14 à 18, le dispositif de réglage comprenant :
- un dispositif de commande électronique (160), dans lequel, pour une pluralité de rapports, respectivement pour chaque rapport, au moins un paramètre de position de changement de vitesse est mis en mémoire, lequel correspond à une position de changement de vitesse de l'élément mobile (44) dans le rapport respectif, le dispositif de commande (160) étant conçu, en réaction à un signal de sélection de rapport qui représente un rapport à régler, commander l'entraînement électromécanique (58) sur la base du paramètre de position de changement de vitesse du rapport à régler, de telle sorte que l'élément mobile (44) atteigne la position de changement de vitesse,
**caractérisé par** un dispositif de compensation, au moyen duquel au moins l'un des paramètres de position de changement de vitesse peut être modifié à la demande d'un utilisateur indépendamment de tous les autres paramètres de position de changement de vitesse.

20. Dispositif de réglage selon la revendication 19, **caractérisé en ce que**, dans le dispositif de commande (160), pour chaque rapport de la pluralité de rapports, respectivement un paramètre de position standard est mis en mémoire, lequel correspond à une position de changement de vitesse standard prédéterminée de l'élément mobile (44), le paramètre de position de changement de vitesse représentant de préférence un écart par rapport au paramètre de position standard.

21. Dispositif de réglage selon la revendication 19 ou la revendication 20, **caractérisé par** un capteur d'accélération (172), lequel fournit une information relative à une vibration du dispositif de réglage.

22. Dispositif de réglage selon l'une des revendications 19 à 21, comprenant en outre un code de programme pouvant être exécuté sur un appareil portatif, le code de programme étant conçu pour commander l'appareil portatif pour la réalisation des étapes suivantes :
a. réception d'une entrée d'utilisateur pour la sélection d'un rapport de la pluralité de rapports,
b. réception d'une entrée d'utilisateur pour le réglage et/ou la modification du paramètre de position de changement de vitesse.

23. Procédé selon l'une des revendications 14 à 18 ou pour le réglage d'un dispositif de réglage selon l'une des revendications 1 à 13 ou 19 à 22, le procédé comprenant les étapes suivantes :
- sélection d'un rapport,
- appel, à partir d'une mémoire (168), d'un paramètre de position de changement de vitesse mis en mémoire, lequel est associé à une position de changement de vitesse d'un élément mobile (44) du dispositif de réglage dans le rapport respectif,
- modification du paramètre de position de changement de vitesse,
- mise en mémoire, dans la mémoire (168), du paramètre de position de changement de vitesse modifié.

24. Procédé selon la revendication 23, **caractérisé en outre par** les étapes suivantes :
a. réglage d'un rapport sélectionné par le biais du dispositif de réglage,
b. détection d'un paramètre fonctionnel du dispositif de réglage, lequel représente une précision du réglage de rapport,
c. ajustement du paramètre de position de changement de vitesse de telle sorte que le paramètre fonctionnel soit modifié au sens d'une amélioration de la précision du réglage de rapport,
d. mise en mémoire du paramètre de position de changement de vitesse réglé à l'étape c.

25. Procédé selon la revendication 24, **caractérisé en ce que** le paramètre fonctionnel représente une vibration du dispositif de réglage et **en ce que** le paramètre de position de changement de vitesse est ajusté au sens d'une réduction de la vibration.

26. Procédé selon la revendication 25, **caractérisé en ce qu'**un dispositif de commande (160) effectue automatiquement les étapes suivantes dans un processus de réglage automatique :
a. réglage du dispositif de réglage dans un premier rapport d'une pluralité de rapports,
b. réglage de la position de l'élément mobile sur une pluralité de positions à l'intérieur d'un intervalle prédéterminé autour de la position de changement de vitesse du rapport à régler et détection d'une vibration du dispositif de réglage pour chaque position réglée,
c. réglage du paramètre de position de changement de vitesse à une valeur qui correspond à la position de l'élément mobile à laquelle la plus petite vibration a été détectée,
d. réglage du dispositif de réglage dans un autre rapport de la pluralité de rapports,
e. répétition des étapes b à d, jusqu'à ce que tous les rapports de la pluralité de rapports aient été réglés au moins une fois.
